# EUROPÄISCHE PATENTSCHRIFT

(11) **EP 3 366 363 B1**
(45) Veröffentlichungstag und Bekanntmachung des Hinweises auf die Patenterteilung: **10.03.2021**
(21) Anmeldenummer: 18154260.6
(22) Anmeldetag: 30.01.2018
(51) Int. Cl.: B01D 46/00, B01D 46/24

(54) **ABSCHEIDEVORRICHTUNG ZUR ABSCHEIDUNG EINES FLUIDS AUS GAS SOWIE ABSCHEIDEELEMENT UND VERBINDUNGSELEMENT FÜR EINE DIESBEZÜGLICHE ABSCHEIDEVORRICHTUNG**
SEPARATION DEVICE FOR SEPARATION OF FLUID FROM GAS AND SEPARATION ELEMENT AND CONNECTING ELEMENT FOR SUCH A SEPARATION DEVICE
DISPOSITIF DE SÉPARATION PERMETTANT DE SÉPARER UN LIQUIDE À PARTIR DU GAZ AINSI QU'ÉLÉMENT DE SÉPARATION ET ÉLÉMENT DE RACCORDEMENT POUR UN TEL DISPOSITIF DE SÉPARATION

(30) Priorität: 28.02.2017 DE 102017001854
(43) Veröffentlichungstag der Anmeldung: 29.08.2018
(73) Patentinhaber: Mann + Hummel GmbH, 71636 Ludwigsburg (DE)
(72) Erfinder: BARTELT, Bertram, 71711 Steinheim (DE); DWORATZEK, Klemens, 68535 Edingen (DE)
(74) Vertreter: Mann + Hummel Intellectual Property

(56) Entgegenhaltungen:
- EP-A1- 2 762 219
- DE-A1-102015 007 899
- DE-U1- 8 501 736

## Beschreibung

### Technisches Gebiet

Die Erfindung betrifft eine Abscheidevorrichtung zur Abscheidung wenigstens eines Fluids, insbesondere von aus Flüssigkeit gebildetem Aerosol, wobei die Flüssigkeit beispielsweise Öl, Kraftstoff, Hydraulikflüssigkeit oder Kühlmittel sein kann, aus Gas, insbesondere aus Luft, einer Anschlusseinrichtung, insbesondere eines Kompressors, einer Druckluftanlage oder einer Vakuumpumpe. Diese Abscheidevorrichtung hat
- mindestens einen zum Abführen des abgeschiedenen Fluids aus der Abscheidevorrichtung ausgebildeten Fluidablaufkanal,
- mindestens ein zur Verbindung eines Abscheideelements der Abscheidevorrichtung mit der Anschlusseinrichtung ausgebildetes Verbindungselement und
- das Abscheideelement mit einem Gehäuse mit mindestens einem darin angeordnetem Filterelement und mit einem zum Verschließen einer Stirnseite des Gehäuses ausgebildeten Gehäusedeckel. Dieser Gehäusedeckel hat
- mindestens einen ersten Gasdurchlass, insbesondere mindestens einen Reinluftauslass, der in Bezug zu einer Montageachse des Gehäuses an der Anschlusseinrichtung zentral, insbesondere koaxial, angeordnet ist,
- ein dem ersten Gasdurchlass zugeordnetes Gewinde, wobei das Gewinde des Gehäusedeckels zum Aufschrauben auf ein Gewinde des Verbindungselements ausgebildet ist und
- mindestens einen zweiten Gasdurchlass, insbesondere mindestens einen Rohlufteinlass, der in Bezug zur Montageachse des Abscheideelements radial außerhalb des ersten Gasdurchlasses angeordnet ist.

### Stand der Technik

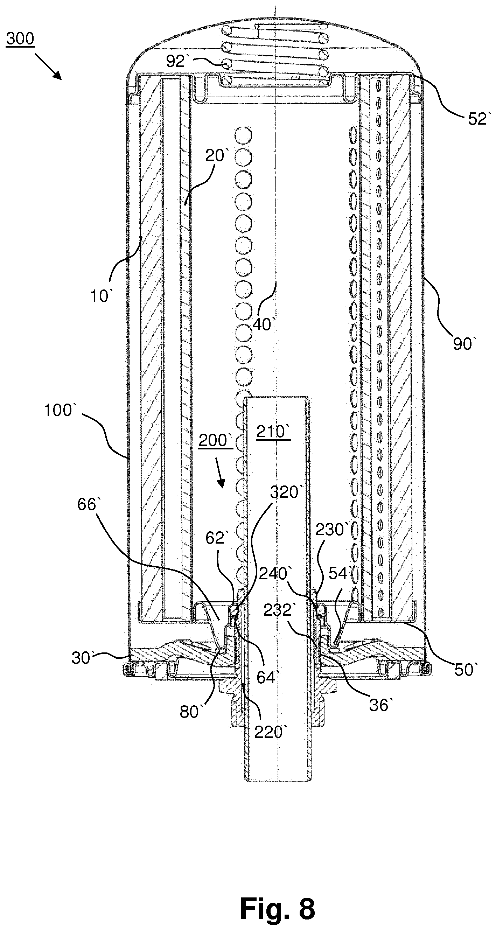

Eine Luftentölbox 300' aus dem Stand der Technik ist in den Figuren 8, 9 und 10 dargestellt. Das Filterelement 10', 20' dieser Luftentölbox ist als ringförmiger Coalescer ausgebildet, der die feinen Öltröpfchen zu größeren, sich durch Schwerkraft im Filterelement 10', 20' und stromab davon nach unten absetzenden Öltropfen zusammenballt. Das abgeschiedene Öl sammelt sich in einer Ringmulde 54' einer unteren Endscheibe 50' des Filterelements 10', 20'.

Zur Verbindung eines Abscheideelements 100' der Luftentölbox mit einer Anschlusseinrichtung, insbesondere mit einem Kompressor, einer Druckluftanlage oder einer Vakuumpumpe, weist die Luftentölbox ein Verbindungselement 200', einen so genannten Verbindungsrohrstutzen oder Nippel, auf. Der Verbindungsrohrstutzen 200' erstreckt sich durch eine erste Gasdurchlassöffnung 32', nämlich durch eine zentrale Öffnung, des Gehäusedeckels 30' der Luftentölbox. Zum Abführen der gereinigten Luft aus der Luftentölbox 100' umgibt der Verbindungsrohrstutzen 200' ein Reinfluidauslassrohr 210' mit einem gasleitenden Innenraum. Dieses Reinfluidauslassrohr 210' ragt in den Innenraum des Filterelements 10', 20' hinein und erstreckt sich durch die erste Gasdurchlassöffnung 32' bis zu einem außerhalb des Abscheideelements 100' angeordneten und zum Verbinden des Verbindungselements mit dem Anschlusselement ausgebildeten Anschlusskopf des Verbindungsrohrstutzens.

Zum Zuführen der zu reinigenden Rohluft weist der Gehäusedeckel 30' der Luftentölbox 100' einen in Bezug zur Montageachse 40' der Luftentölbox 100' radial außerhalb des ersten Gasdurchlasses 32' angeordneten zweiten Gasdurchlass 34' auf. Dieser zweite Gasdurchlass 34'ist der Rohseite der Luftentölbox zugeordnet.

Zum Abführen des abgeschiedenen Öls aus der Luftentölbox 100' weist der Verbindungsrohrstutzen 200' einen sich vom Innenraum des Abscheideelements 100'zum Anschlusskopf des Verbindungsrohrstutzens hin erstreckenden Fluidablaufkanal 220' auf. Dieser Fluidablaufkanal 220' ist innerhalb des Verbindungsrohrstutzens angeordnet, nämlich zwischen dem rohrförmigen Reinfluidauslass 210' und einer den rohrförmigen Reinfluidauslass 210' umgebenden radial äußeren Umfangsseite 230' des Verbindungsrohrstutzens 200'. Damit das abgeschiedene Öl bis zur Höhe des Fluidablaufkanals 220' angestaut wird und in den Fluidablaufkanal 220' eintreten kann, ist zwischen der unteren Endscheibe 50' und der radial äußeren Umfangsseite 230' des Verbindungsrohrstutzens eine Dichtung 320', nämlich ein O-Ring, angeordnet. Dieser O-Ring 320' dichtet die Rohseite der Luftentölbox gegenüber der Reinseite der Luftentölbox 100' ab und verhindert, dass das Öl zwischen dem die zentrale Öffnung 32' des Gehäusedeckels 30'umgebenden Bereich 36' des Gehäusedeckels 30' und der radial äußeren Umfangsseite 230' des Verbindungsrohrstutzens 200' abläuft. Der O-Ring hat also die Funktion das Öl aufzustauen, damit es innerhalb des Verbindungsrohrstutzens, nämlich über den Fluidablaufkanal 220' zwischen Reinfluidauslassrohr 210' und der radial äußeren Umfangsseite 230' des Verbindungsrohrstutzens, abgeführt wird.

Nachteilig an diesem O-Ring 320' ist jedoch, dass die Montage der Luftentölbox erschwert wird, weil die Reibung des O-Rings 320' überwunden werden muss, um beim Aufstecken des Gehäuses 100' das Gehäusedeckelgewinde 36' mit dem Gewinde 232' des Verbindungsrohrstutzens in Eingriff zu bringen. Diese aufgrund des O-Rings 320' erforderliche zusätzliche Reibkraft erschwert also das Zudrehen des Gehäusedeckelgewindes 36'.

Damit der O-Ring dichtend zwischen Gehäusedeckel 30' und Verbindungsrohrstutzen 200' verpresst werden kann, muss der Verbindungsrohrstutzen 200' an seiner dem O-Ring zugewandten Umfangsseite eine besonders sorgfältig ausgeführte Dichtfläche 240' aufweisen. Diese Dichtfläche 240' kann jedoch beim Gebrauch der Luftentölbox mit der Zeit abnutzen.

Bei der Montage des Abscheideelements 100' wird der Gehäusedeckel 30' an der radial äußeren Umfangsseite 230' des Verbindungsrohrstutzens entlanggeführt, bis ein Gewinde 36' des Gehäusedeckels 30' mit einem Gewinde 232' des Verbindungsrohrstutzens in Kontakt tritt. Dabei kann die Dichtfläche 240' des Verbindungsrohrstutzens beschädigt werden.

Ferner kann bei der Montage des Abscheideelements 100' am Verbindungsrohrstutzen 200' versehentlich vergessen werden, den O-Ring 320' einzusetzen. Auch kann versehentlich ein O-Ring 320' eingesetzt werden, der vom Material falsch ausgelegt ist, beispielsweise nicht ölbeständig ist.

Ist bei der, in den Figuren 8 bis 10 gezeigten und aus dem Stand der Technik bekannten Luftentölbox der O-Ring 320' nicht dichtend zwischen der untere Endscheibe 50' und dem Verbindungsrohrstutzen 200' verspresst, so wird bereits abgeschiedenes Öl wieder in den Luftstrom eingebracht. Es tritt ein so genanntes reentrainment auf. Dieses reentrainment tritt auf, wenn bereits abgeschiedenes Öl zwischen dem radial inneren Bereich der unteren Endscheibe 50' und der radial äußeren Umfangsseite 230' des Verbindungsrohrstutzens 200' vorbei fließt, dann an einem zwischen der Ringmulde 54' der unteren Endscheibe 50' und dem Gehäusedeckel 30' angeordneten Dämpfungsring 80' vorbei strömt und sich zwischen der unteren Endscheibe 50 und dem Gehäusedeckel 30' sammelt. Durch den zweiten Gasdurchlass 34' der Luftentölbox einströmende Rohluft durchströmt das zwischen der unteren Endscheibe 50' und dem Gehäusedeckel 30' gesammelte Öl, nimmt einen Teil des Öls auf, strömt am Dämpfungsring 80' vorbei, durchströmt den undichten Bereich zwischen dem radial inneren Rand der unteren Endscheibe 50' und dem Verbindungselement 200' und trägt so das bereits abgeschiedene Öl in den Innenraum des Filterelements 10', 20' und zur Reinseite der Luftentölbox.

Der aus dem Stand der Technik bekannte Dämpfungsring 80' dient dazu Klappergeräusche zu dämpfen. Klappergeräusche können entstehen, wenn die als Toleranzausgleich für das Abscheideelement 100' eingebaute Feder durch mechanische Schwingung angeregt wird. Über die Feder kann es zeitweise zu einem kurzfristigen Abheben der unteren Endscheibe 50' von dem Gehäusedeckel 30' kommen, so dass das Abscheideelement 100' mit der unteren Endscheibe 50' im Gehäuse axial hin und herschwingt, wobei beim Wiederaufsetzen der unteren Endscheibe 50' auf den Gehäusedeckel 30' ein Klappergeräusch entsteht. Dieser Dämpfungsring 80' wird auch Klapperschutz genannt. Der zwischen der unteren Endscheibe 50' und dem Gehäusedeckel 30' angeordnete Dämpfungsring 80' ist aus einem einfachen Elastomer gebildet und hat eine Höhe oder axiale Erstreckung im Bereich zehntel Millimeter. Da durch diesen Dämpfungsring 80' die Rohseite der Luftentölbox nicht von der Reinseite der Luftentölbox abgedichtet wird, muss bei der in den Figuren 8 bis 10 gezeigten Luftentölbox zwischen der unteren Endscheibe 50' und dem Verbindungsrohrstutzen 200' der O-Ring 320' angeordnet werden.

Der aus dem Stand der Technik bekannte O-Ring 320' zum Abdichten der Rohseite der Luftentölbox gegenüber der Reinseite der Luftentölbox hat jedoch folgende Nachteile:
- der O-Ring kann bei der Montage beschädigt werden;
- der O-Ring wirkt mit einer Dichtfläche am Verbindungsrohrstutzen 200' zusammen; diese Dichtfläche am Verbindungsrohrstutzen 200' kann beschädigt werden und unterliegt als Lebensdauerbauteil einem zwar geringen Verschleiß, der aber dennoch zur Undichtigkeit führen kann;
- um die Dichtfunktion sicherzustellen, bedarf es eine Mindestverpressung des O-Ringes die zu einem erhöhten Anzugs- und Lösemoment führen;
- der O-Ring selbst kann im Laufe des Betriebes sich soweit verändern, dass die Abdichtung nicht mehr gewährleistet ist und
- als funktionsrelevantes Bauteil verlangt der O-Ring besondere Sorgfalt bei Konstruktion und Produktion.

Aus dem Stand der Technik sind Luftentölboxen bekannt, welche keinen O-Ring zum Abdichten der unteren Endscheibe gegenüber dem Verbindungselement aufweisen. Allerdings erfolgt bei diesen Luftentölboxen der Ölablauf nicht innerhalb des Verbindungselements, sondern durch den Gehäusedeckel, beispielsweise durch den ersten Gasauslass des Gehäusedeckels, etwa zwischen dem Gehäusedeckel und dem Verbindungselement.

Aus der Druckschrift DE 10 2015 007 899 A1 ist eine Abscheidevorrichtung nach dem Oberbegriff des Anspruchs 1, nämlich eine Luftentölbox, bekannt. Bei dieser Luftentölbox läuft das abgeschiedene Öl über einen zwischen dem Gehäusedeckel und dem Verbindungselement angeordneten Fluidablaufkanal (siehe Figuren 1 und 2, Bezugszeichen 36, 48, 64 der DE 10 2015 007 899 A1) aus der Luftentölbox ab. Dieser Fluidablaufkanal ist durch ins Gewinde des Gehäusedeckels eingefräste Nuten bereitgestellt. Der Ölablauf erfolgt also über das Gewinde des Gehäusedeckels.

Die Druckschrift EP 2 762 219 A1 offenbart eine Luftentölbox, bei welcher der Ölablauf über das Gewinde des Verbindungselements, nämlich durch ins Gewinde des Verbindungselements eingefräste Nuten erfolgt (siehe Figur 6, Bezugszeichen 28 der EP 2 762 219 A1).

Figur 10 der Druckschrift EP 2 762 219 A1 zeigt ein Ausführungsbeispiel, bei dem das Gewinde des Gehäusedeckels und das Gewinde des Verbindungselements jeweils durchgehend ausgebildet sind und der Fluidablaufkanal durch mindestens eine, mit Abstand zum Gewinde angeordnete Durchgangsbohrung (Bezugszeichen 280 der Figur 10 der Druckschrift EP 2 762 219 A1) des Gehäusedeckels bereitgestellt ist.

Ferner ist aus DE 85 01 736 U1 eine Vorrichtung zum Abscheiden von Öltröpfchen aus Luft bekannt.

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Abscheidevorrichtung der eingangs genannten Art so weiterzubilden, dass potentielle Fehlfunktionen der Abscheidevorrichtung ausgeschlossen und die Montage des Abscheideelements in der Abscheidevorrichtung erleichtert wird.

### Offenbarung der Erfindung

Diese Aufgabe wird durch eine Vorrichtung mit den im Anspruch 1 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Die Abscheidevorrichtung dient zur Abscheidung wenigstens einer Flüssigkeit aus Gas, welche aus einer Anschlusseinrichtung zugeführt wird. Sowohl das gereinigte Gas und die abgeschiedene Flüssigkeit werden durch die Anschlusseinrichtung auch wieder abgeführt. Die Abscheidevorrichtung weist auf mindestens einen zum Abführen der abgeschiedenen Flüssigkeit aus der Abscheidevorrichtung ausgebildeten Fluidablaufkanal, mindestens ein zur Verbindung eines Abscheideelements der Abscheidevorrichtung mit der Anschlusseinrichtung ausgebildetes Verbindungselement, welches auch regelmäßig als Anschlussnippel bezeichnet wird und in der Regel einmal montiert an der Anschlusseinrichtung verbleibt, ein Abscheideelement mit einem Gehäuse und mindestens einem darin angeordnetem Koaleszenzfilterelement (kurz: Filterelement) und einen zum Verschließen einer Stirnseite des Gehäuses ausgebildeten Gehäusedeckel mit mindestens einem ersten Gasdurchlass, der in Bezug zu einer Montageachse des Abscheideelements an der Anschlusseinrichtung zentral, insbesondere koaxial, angeordnet ist, einem dem ersten Gasdurchlass zugeordnetes Gewinde, wobei dieses Gehäusedeckelgewinde zum Aufschrauben auf ein Gewinde des Verbindungselements ausgebildet ist und mindestens einem zweiten Gasdurchlass, der in Bezug zur Montageachse des Abscheideelements radial außerhalb des ersten Gasdurchlasses angeordnet ist. In dem Filterelement sind mehrere aufeinander liegend gewickelte Lagen eines Koaleszenzfiltermediums, beispielsweise eines Glasfaserpapiers, angeordnet, in welchen kleine Flüssigkeitströpfchen zu größeren Tropfen vereint und durch Schwerkraft nach unten in Richtung des Flüssigkeitsauslasses drainiert werden.

Mithin basiert die Erfindung darauf, dass das aus dem Gehäusedeckelgewinde und dem Verbindungselementgewinde gebildete Befestigungsgewinde der Abscheidevorrichtung dicht oder fluidundurchlässig, insbesondere im Wesentlichen flüssigkeitsundurchlässig ist. Das Befestigungsgewinde und das Gehäusedeckelgewinde sind hierzu bevorzugt ununterbrochen, d. h. die Gewinde weisen mehrere vollständige und ununterbrochene Gewindegänge auf. Weil das Gewinde des Gehäusedeckels insbesondere auf diese Weise zum Dichten oder zum dichtenden Eingriff in das Gewinde des Verbindungselements ausgebildet ist, also dicht mit dem Gewinde des Verbindungselements verbindbar ist, ist bei der vorliegenden Erfindung der Gehäusedeckel ohne zusätzliches Dichtelement, insbesondere ohne den aus dem Stand der Technik bekannten O-Ring 320' (vgl. Figuren 8 bis 10), dicht mit dem Verbindungselement verbindbar. Ein Flüssigkeitsablauf durch das Befestigungsgewinde der Abscheidevorrichtung wird zuverlässig verhindert. Somit muss die abgeschiedene Flüssigkeit radial innerhalb des Befestigungsgewindes der Abscheidevorrichtung, nämlich innerhalb des im ersten Gasdurchlass angeordneten Verbindungselements, ablaufen. Bei dem Abscheideelement der vorliegenden Erfindung ist also der Fluidablaufkanal in Bezug zur Montageachse des Abscheideelements radial innerhalb des Gehäusedeckelgewindes bzw. radial innerhalb des Verbindungselementgewindes angeordnet. Somit erfolgt der Flüssigkeitsablauf innerhalb des Verbindungselements, beispielsweise durch mindestens einen innerhalb des Verbindungselements angeordneten ringförmigen Ablaufkanal.

Um einen Flüssigkeitsablauf durch den Gehäusedeckel zu verhindern, ist der Gehäusedeckel zwischen dem Gewinde des Gehäusedeckels und dem zweiten Gasdurchlass des Gehäusedeckels vollständig geschlossen oder vollständig dicht. Der, beispielsweise rohseitige, zweite Gasdurchlass und die Bohrung des Gewindes des Gehäusedeckels sind die einzigen Öffnungen des Deckels. Es gibt also zwischen dem Gewinde des Gehäusedeckels und dem zweiten Gasdurchlass des Gehäusedeckels keine weitere Öffnung.

Bei einer vorteilhaften Ausführungsform des Abscheideelements der vorliegenden Erfindung ist der erste Gasdurchlass des Gehäusedeckels zylinderförmig ausgebildet. Das Gehäusedeckelgewinde weist mindestens einen Gewindegang auf, der sich fortlaufend helixartig um den Mantel des zylinderförmig ausgebildeten ersten Gasdurchlass des Gehäusedeckels windet und vollständig geschlossen ist. Das Gehäusedeckelgewinde ist also, abgesehen von dem mindestens einen, zum dichten Eingriff oder zum dichtenden Eingriff in das Verbindungselementgewinde ausgebildeten Gewindegang, frei von Einschnitten oder Unterbrechungen. Das Gewinde des Gehäusedeckels ist also vollständig kreisförmig umlaufend und ohne in Bezug zur Montageachse des Abscheideelements radiale Einschnitte oder Unterbrechungen ausgebildet. Diese geschlossene Ausbildung des Gewindegangs des Gehäusedeckelgewindes ermöglicht einen im Wesentlichen dichten oder im Wesentlichen dichtenden Eingriff des Gehäusedeckelgewindes in das Verbindungselementgewinde oder mit dem Verbindungselementgewinde.

Die Einschraubtiefe des Gehäusedeckelgewindes beträgt vorteilhafterweise mindestens ein Drittel des Durchmessers des ersten Gasdurchlasses. Mit anderen Worten beträgt die sich in Bezug zur Montageachse des Abscheideelements koaxial erstreckende Profilhöhe des Gehäusedeckelgewindes vorteilhafterweise mindestens ein Drittel des Durchmessers des ersten Gasdurchlasses. Mit dieser Mindesteinschraubtiefe oder Mindestprofilhöhe des Gehäusedeckelgewindes kann eine gute Dichtwirkung des Gehäusedeckelgewindes bereitgestellt werden.

Das Gehäusedeckelgewinde ist vorteilhafterweise aus hochfestem Metall, insbesondere aus Stahl höherer Festigkeit, zum Beispiel aus unlegiertem Qualitätsstahl nach DIN EN 10020.

Um einen möglichst dichten Eingriff zwischen dem Gehäusedeckelgewinde und dem Verbindungselementgewinde bereitzustellen, ist das Gehäusedeckelgewinde und das Verbindungselementgewinde vorteilhafterweise jeweils in der Toleranzklasse mittel (m) nach DIN ISO 965-1, insbesondere in der Toleranzklasse M39 nach DIN ISO 965-1, oder in der Toleranzklasse fein (f) nach DIN ISO 965-1, ausgeführt. Die Toleranzklasse definiert wieviel Spalt zwischen Mutterteil und Schraubenteil, also zwischen dem Gehäusedeckelgewinde und dem Verbindungselementgewinde besteht. Mit anderen Worten definiert die Toleranzklasse mit wieviel Toleranz die Gewindeflanken des Gehäusedeckelgewindes und des Verbindungselementgewindes aneinander anliegen.
Die Feinheit, also die Anzahl der Gänge pro Zentimeter Profilhöhe, des Gewindes des Abscheideelements weist vorteilhafterweise die höchste Gewindequalität auf.

Zum Verstärken der Dichtwirkung des Gewindes der Abscheidevorrichtung kann im Bereich mindestens eines Gewindegangs des Gehäusedeckelgewindes und/oder des Verbindungselementgewindes mindestens ein Gewindedichtmittel angeordnet sein.

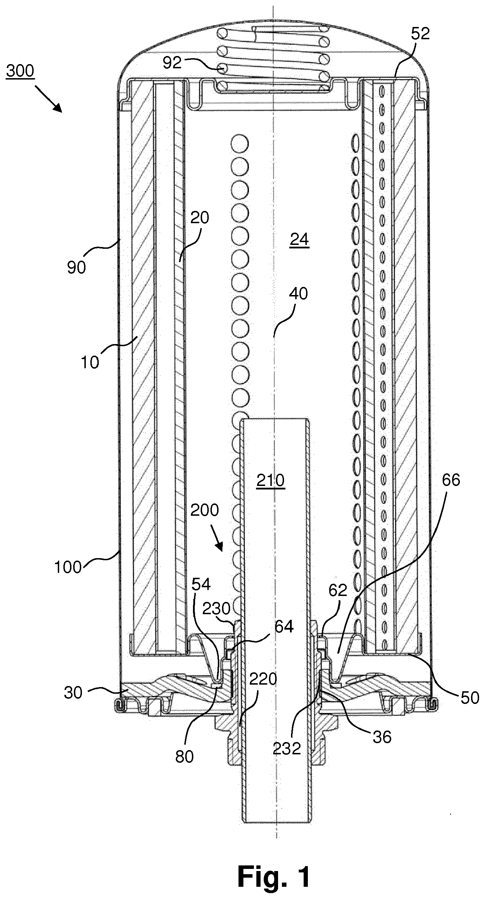

Das Gehäusedeckelgewinde kann ein Innengewinde oder ein Außengewinde sein. Bei dem in den Figuren 1 bis 7 gezeigten Ausführungsbeispiel ist das Gehäusedeckelgewinde ein Innengewinde und das Verbindungselementgewinde ein Außengewinde.

Bei einer vorteilhaften Ausführung des Abscheideelements der vorliegenden Erfindung weist das Filterelement zwei einander gegenüberliegende und sich in Bezug zur Montageachse des Abscheideelements radial erstreckende Stirnseiten auf. Die dem Gehäusedeckel zugewandte Stirnseite ist durch eine erste Endscheibe begrenzt. Die gegenüberliegende Stirnseite ist durch eine, vom Gehäusedeckel abgewandte, weitere Endscheibe begrenzt. Zum Durchführen des Verbindungselements weist die erste Endscheibe eine Durchstrecköffnung auf. Diese Durchstrecköffnung ist dem ersten Gasdurchlass zugeordnet und von einem in Bezug zur Montageachse des Abscheideelements radial inneren Randbereich der ersten Endscheibe umgeben. Dieser radial innere Randbereich der ersten Endscheibe ist vorteilhafterweise insbesondere zusätzlich als eine innere Abstützkontur ausgebildet oder ausgelegt, welche zum Abstützen oder Führen des Verbindungselements bei der Montage dient. Im Gebrauchsstellung ist bevorzugt die Durchstrecköffnung oberhalb, axial beabstandet von dem Verbindungselementgewinde angeordnet und umschließt einen zylindrischen, nicht mit einem Gewinde versehenen Bereich des Verbindungselements, der sich von dem mit Gewinde versehenden Bereich axial weg in den Innenraum des Filterelements hineinerstreckt.

Das Verbindungselement weist mindestens einen gasleitenden Innenraum, insbesondere ein Reinfluidauslassrohr, auf, der sich in Gebrauchsstellung der Abscheidevorrichtung durch die Durchstrecköffnung der ersten Endscheibe erstreckt.

Erfindungsgemäß weist das Filterelement eine sich in Bezug zur Montageachse des Abscheideelements radial erstreckende und dem Gehäusedeckel zugewandte Stirnseite auf, welche durch eine erste Endscheibe begrenzt ist. Diese erste Endscheibe wir auch als offene Endscheibe bezeichnet und weist eine zum Durchführen des Verbindungselements ausgebildete und dem ersten Gasdurchlass zugeordnete Durchstrecköffnung auf, wobei die Durchstrecköffnung von einem in Bezug zur Montageachse des Abscheideelements radial inneren Randbereich der ersten Endscheibe begrenzt ist. Weiter sind das Verbindungselement und die erste Endscheibe, insbesondere das Verbindungselement und die Durchstrecköffnung, insbesondere das Verbindungselement und ein radial innerer, insbesondere kreisförmiger Randbereich in Gebrauchsstellung der Abscheidevorrichtung kontaktlos. Kontaktlos bedeutet in diesem Zusammenhang, dass kein direkter Kontakt zwischen Endscheibe und Verbindungselement vorhanden ist, insbesondere kein dichtender Kontakt mittels einer Dichtung, eines Dichtringes oder einer Kontaktdichtfläche. So kann die Montage erleichtert werden. Bevorzugt sind das Verbindungselement und die erste Endscheibe derart kontaktlos, dass Gehäusedeckelgewinde und Innenraum des Filter elements gedrosselt fluidverbunden sind.

Um einen Flüssigkeitsablauf durch die Durchstrecköffnung zu reduzieren, ist bei einem vorteilhaften Ausführungsbeispiel der Abscheidevorrichtung der vorliegenden Erfindung das Verbindungselement im Bereich der Durchstrecköffnung derart in Bezug zum Filterelement angeordnet, dass der Abstand zwischen der in Bezug zur Montageachse des Abscheideelements radial äußeren Umfangswand des Verbindungselements und dem radial inneren Randbereich der ersten Endscheibe höchstens 3 mm, bevorzugt weniger als 2 mm und besonders bevorzugt weniger als 1 mm beträgt. Dieser Abstand kann auch als Breite des dort gebildeten Spaltes bezeichnet werden. Hierdurch wird lokal eine Drosselwirkung erzeugt und damit der Ölfluss und Gasaustausch zwischen dem Verbindungsnippel und dem Abscheideelement minimiert.

Um einen Flüssigkeitsablauf durch die Durchstrecköffnung weitestgehend oder vollständig zu verhindern, ist bei einem vorteilhaften Ausführungsbeispiel der Abscheidevorrichtung der vorliegenden Erfindung das Verbindungselement im Bereich der Durchstrecköffnung derart in Bezug zum Filterelement angeordnet, dass der Abstand zwischen der in Bezug zur Montageachse des Abscheideelements radial äußeren Umfangswand des Verbindungselements und dem radial inneren Randbereich der ersten Endscheibe höchstens etwa ein Prozent beträgt vom Durchmesser, insbesondere höchstens ein Prozent beträgt vom Radius der in Gebrauchsstellung in der Durchstrecköffnung angeordneten radial äußeren Umfangswand des Verbindungselements.

Die in der Gebrauchsstellung in der Durchstrecköffnung angeordnete radial äußere Umfangswand des Verbindungselements ist vorteilhafterweise als Dichtfläche ausgebildet.

Unabhängig hiervon oder in Verbindung hiermit beträgt bei einem vorteilhaften Ausführungsbeispiel der Abstand zwischen der in Bezug zur Montageachse des Abscheideelements radial äußeren Umfangswand des Verbindungselements und dem radial inneren Randbereich der ersten Endscheibe mindestens 0,1 mm. Dieser Mindestabstand von 0,1 mm erleichtert das Einsetzen des Verbindungselements in die Durchstrecköffnung bei der Montage der Abscheidevorrichtung.

Des Weiteren kann das Abscheideelement der vorliegenden Erfindung zusätzlich ein Labyrinthdichtungselement aufweisen, um einen Flüssigkeitsablauf durch die Durchstrecköffnung zu verhindern. Dieses Labyrinthdichtungselement ist dazu ausgebildet mit dem sich in Gebrauchsstellung des Abscheideelements durch den ersten Gasdurchlass erstreckenden Verbindungselement nach Art einer Labyrinthdichtung derart zusammenzuwirken, dass ein zwischen der ersten Endscheibe und dem Verbindungselement angeordnete Spalt der Durchstrecköffnung im Wesentlichen fluidundurchlässig oder nur gedrosselt fluiddurchlässig ist.

Zum Bereitstellen einer Labyrinthdichtung kann der innere Randbereich der ersten Endscheibe mindestens ein die Durchstrecköffnung umgebendes, in Bezug zur Montageachse des Abscheideelements sich radial nach innen erstreckendes erstes Stegelement, insbesondere einen ersten Kragen, und mindestens ein die Durchstrecköffnung umgebendes, in Bezug zur Montageachse des Abscheideelements sich radial nach innen erstreckendes weiteres Stegelement, aufweisen. Diese als Labyrinthdichtungselemente ausgebildete Stegelemente sind derart in Bezug zur Montageachse des Abscheideelements axial versetzt zueinander angeordnet, dass sie in Gebrauchsstellung des Abscheideelements mindestens einen Fluidstauraum bilden, wobei dieser Fluidstauraum dazu ausgebildet ist vom Filterelement abgeschiedene Flüssigkeit, welche in die Durchstrecköffnung fließt, zu stauen oder zu sammeln. Das erste Stegelement und das weitere Stegelement ist also dazu ausgebildet, nach Art einer Labyrinthdichtung mit dem in Gebrauchsstellung des Abscheideelements sich durch die Durchstrecköffnung erstreckenden Verbindungselement derart zusammenzuwirken, dass der Spalt der Durchstrecköffnung im Wesentlichen fluidundurchlässig ist.

In diesem Zusammenhang wird unter Labyrinthdichtung eine berührungsfreie Dichtung verstanden. Die Dichtwirkung beruht auf einer Verlängerung des Strömungsweges durch den abzudichtenden Spalt, wodurch der Strömungswiderstand wesentlich erhöht wird. Diese Verlängerung des Strömungsweges erfolgt bei einem vorteilhaften Ausführungsbeispiel des Abscheideelements der vorliegenden Erfindung durch eine wechselweise Anordnung von mindestens zwei, den ersten Gasdurchlass umgebenden Stegelementen, welche berührungsfrei mit dem im ersten Gasdurchlass angeordneten Verbindungselement zusammenwirken. Auf diese Weise können sie Stegelemente eine Kammerung zur Unterteilung des abzudichtenden Spaltes des ersten Gasdurchlasses bereitstellen. Aufgrund des hohen Strömungswiderstandes in dem Spalt des ersten Gasdurchlasses, der zwischen dem Verbindungselement und dem Abscheideelement angeordnet ist, kann nur eine geringe, tolerierbare Fluidmenge durch die Labyrinthdichtung austreten.

Die gedrosselt fluiddurchlässige, insbesondere als Labyrinthdichtung ausgeführte kontaktlose Engstelle zwischen erster Endscheibe und Verbindungselement ermöglicht vorteilhaft benachbart, oberhalb der Gewindeverbindung des Befestigungsgewinde, eine fluidische Entlastung der Gewindeverbindung, d. h. die Engstelle trägt dazu bei, den Fehlstrom, auch by-pass genannt, zu minimieren. Sollte doch einmal bei bestimmten Betriebsbedingungen ein Fehlstrom durch das Befestigungsgewinde in den Innenraum des Filterelements hinein auftreten, besteht die Gefahr, dass Flüssigkeit, die sich oberhalb des Befestigungsgewindes ansammelt, in Form von Tröpfchen mitgerissen wird. Die Engstelle, bzw. der Spalt oder die Labyrinthdichtung stellen für derartige Fälle eine Drossel dar, welche diesen Effekt reduzieren kann.

Um einen Übertritt von Fluid vom zweiten Gasdurchlass zum ersten Gasdurchlas unter Umgehung des Filterelements zu unterbinden, weist das Abscheideelement neben dem zum dichten Eingriff in das Verbindungselementgewinde ausgebildeten Gehäusedeckelgewinde und dem optionalen Labyrinthdichtungselement zusätzlich mindestens ein Dichtungs- und Dämpfungselement auf, das zwischen dem Filterelement, insbesondere zwischen der ersten Endscheibe, und der dem Innenraum des Abscheideelements zugewandten Innenseite des Gehäusedeckels dichtend verpresst ist. Vorteilhaft ist das Dichtungs- und Dämpfungselement dazu ausgebildet
- eine Reinseite des Abscheideelements von einer ungereinigtes Fluid aufweisenden Rohseite des Abscheideelements abzudichten und
- in Bezug zur Montageachse des Abscheideelements axial gerichtete Schwingungen des Abscheideelements abzudämpfen.

Dieses Dichtungs- und Dämpfungselement kann beispielsweise in Bezug zur Montageachse des Abscheideelements koaxial dichtend verpresst sein zwischen der ersten Endscheibe, insbesondere zwischen mindestens einem sich axial in Richtung zum Gehäusedeckel hin erstreckenden Vorsprung, beispielsweise zwischen mindestens einem senkrechten Steg oder mindestens einer Ringnut, der ersten Endscheibe und dem Gehäusedeckel.

Alternativ zu einer axialen Verpressung des Dichtungs- und Dämpfungselement kann das Dichtungs- und Dämpfungselement auch in Bezug zur Montageachse des Abscheideelements radial zwischen der ersten Endscheibe, insbesondere zwischen mindestens einem sich axial in Richtung zum Gehäusedeckel hin erstreckenden Vorsprung, beispielsweise zwischen mindestens einem senkrechten Steg oder mindestens einer Ringnut, der ersten Endscheibe und dem Gehäusedeckel verpresst sein.

Vorteilhafterweise ist das Dichtungs- und Dämpfungselement derart axial verpresst zwischen der ersten Endscheibe und dem Gehäusedeckel, dass das Dichtungs- und Dämpfungselement dem Druck zwischen Roh- und Reinseite standhalten kann.

Die in Bezug zur Montageachse des Abscheideelements axiale oder koaxiale Erstreckung oder Höhe oder Stärke des Dichtungs- und Dämpfungselement beträgt vorteilhafterweise mindestens einen Millimeter, insbesondere mindestens zwei Millimeter, beispielsweise mindestens drei Millimeter.

Das Dichtungs- und Dämpfungselement ist vorteilhafterweise aus mindestens einem Material gebildet ist, das sowohl eine Temperaturbeständigkeit von über 100 Grad Celsius als auch eine Langzeitölbeständigkeit, insbesondere eine Ölbeständigkeit nach DIN EN 60811-2-1, aufweist.

Das Dichtungs- und Dämpfungselement ist also vorteilhafterweise aus Material mit gleichzeitiger hoher thermischer Beständigkeit und hoher chemischer Beständigkeit, insbesondere hoher Ölbeständigkeit. Beispielsweise kann das Dichtungs- und Dämpfungselement im Wesentlichen aus mindestens einem Fluorelastomer, beispielsweise aus Fluorkautschuk (FKM), etwa aus FKM mit 60 - 80 Shore A, oder aus Fluorkarbonkautschuk und/oder aus mindestens einem Gummiwerkstoff, beispielsweise aus mindestens einem peroxidisch vernetztem Gummiwerkstoff, etwa aus Hydriertem Acrylnitrilbutadien-Kautschuk (HNBR), gebildet sein.

Die vorliegende Erfindung betrifft des Weiteren die Verwendung mindestens eines Abscheideelements gemäß der vorstehend dargelegten Art und/oder eines Verbindungselements gemäß der vorstehend dargelegten Art in einer Abscheidevorrichtung, insbesondere in einem Ölabscheider, etwa in einer Luftentölbox, zur Reinigung der Abluft eines Kompressors, einer Druckluftanlage oder einer Vakuumpumpe.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 4 nachgeordneten Ansprüche verwiesen, andererseits werden weitere Ausgestaltungen, Merkmale und Vorteile der vorliegenden Erfindung nachstehend unter anderem anhand der durch die Fig. 1 bis 7 veranschaulichten Ausführungsbeispiele näher erläutert.

Es zeigt:
- Fig. 1: in Längsschnittdarstellung ein Ausführungsbeispiel für eine Abscheidevorrichtung nach der vorliegenden Erfindung mit einem Ausführungsbeispiel für ein Abscheideelement nach der vorliegenden Erfindung und mit einem Ausführungsbeispiel für ein Verbindungselement nach der vorliegenden Erfindung;
- Fig. 2: in schematischer Darstellung eine Detailansicht des Übergangs zwischen einer dem Gehäusedeckel zugewandten unteren Endscheibe des Abscheideelements aus Figur 1 und dem der unteren Endscheibe zugewandten Bereich der radial äußeren Umfangswand des Verbindungselements aus Figur 1;
- Fig. 3: in Längsschnittdarstellung eine Detailansicht der Abscheidevorrichtung aus Fig. 1, wobei diese Abscheidevorrichtung mit einem Anschlusselement verbunden ist;
- Fig. 4: in Längsschnittdarstellung das Verbindungselement aus Fig. 1;
- Fig. 5: in Querschnittdarstellung das Verbindungselement aus Fig. 1;
- Fig. 6: in halbisometrischer Längsschnittdarstellung das Abscheideelement aus Fig. 1;
- Fig. 7: in isometrischer Darstellung das Abscheideelement aus Fig. 1
- Fig. 8: in Längsschnittdarstellung eine Abscheidevorrichtung aus dem Stand der Technik mit einem Abscheideelement aus dem Stand der Technik und mit einem Verbindungselement aus dem Stand der Technik;
- Fig. 9: in halbisometrischer Längsschnittdarstellung das konventionelle Abscheideelement aus Fig. 8;
- Fig. 10: in isometrischer Darstellung das konventionelle Abscheideelement aus Fig. 8.

Gleiche oder ähnliche Ausgestaltungen, Elemente oder Merkmale sind in den Fig. 1 bis 10 mit identischen Bezugszeichen versehen.

### Ausführungsform(en) der Erfindung

In den Fig. 1 bis Fig. 7 ist eine Abscheidevorrichtung, nämlich eine Luftentölvorrichtung 300, in unterschiedlichen Darstellungen, Schnitten und Detailansichten gezeigt. Die Luftentölvorrichtung 300 dient zur Abscheidung von etwa in Luft mitgetragenem Öl von der Luft. Die Luftentölvorrichtung 300 findet beispielsweise Einsatz bei Kompressoren, Vakuumpumpen, Druckluftanlagen oder dergleichen. Sie kann vor einem Einlass oder nach einem Auslass eines entsprechenden Gerätes angeordnet sein.

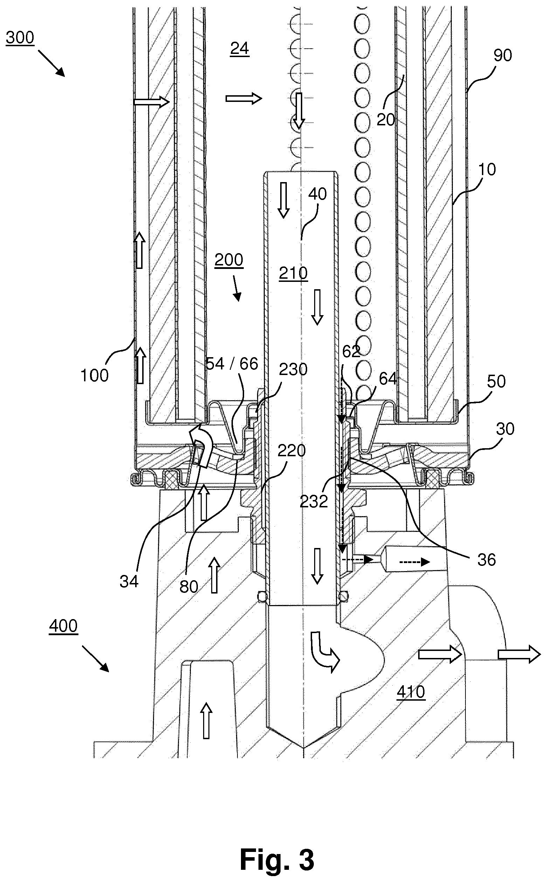

Die Luftentölvorrichtung 300 umfasst ein Abscheideelement 100, das auch als Luftentölbox bezeichnet werden kann. Das Abscheideelement 100 ist austauschbar an einem Anschlusskopf 410, in Fig. 3 unten, befestigt. Der Anschlusskopf 410 dient als Anschlusseinrichtung für entsprechende Luftleitungen und Ölleitungen zur Verbindung mit dem entsprechenden Gerät. In Fig. 3 ist der Anschlusskopf 410 lediglich schematisch dargestellt.

Ein Verbindungselement 200, nämlich ein hohler, rohrstutzenartiger Verbindungsnippel verbindet das Abscheideelement 100 mit dem Anschlusskopf 410. Zum Abführen der gereinigten Luft aus der Luftentölvorrichtung 300 umgibt der Verbindungsrohrstutzen 200 ein Reinfluidauslassrohr 210 mit einem luftleitenden Innenraum.

Das Luftentölelement 100 umfasst ein becherförmiges Gehäuse 90. In dem Gehäuse 90 ist beispielhaft ein als ringförmiges Koaleszenzelement ausgebildetes Filterelement 10, 20 angeordnet. Als Filtermedium weist das Filterelement 10, 20 beispielhaft eine Glasfasermatte 10 auf, die mehrfach ringförmig gewickelt und stirnseitig durch eine obere Endscheibe 52 und eine dem Anschlusskopf 410 zugewandte untere Endscheibe 50 begrenzt ist. Als weiteres Filtermedium 20 ist im Inneren der Glasfaserwicklung ein Vlies angeordnet.

Die dem Anschlusselement 400 zugewandte Öffnung des Gehäuses 90 ist mit einem Gehäusedeckel 30 verschlossen.

Das Reinfluidauslassrohr 210 ragt in den Innenraum des Filterelements 10, 20 hinein und erstreckt sich durch eine zentrale Reinluftauslassöffnung 32 des Gehäusedeckels 30 bis zu einem außerhalb des Abscheideelements 100 angeordneten und zum Verbinden des Verbindungsnippels 200 mit dem Anschlusselement 400 ausgebildeten Anschlusskopf 410.

Zum Zuführen der zu reinigenden Rohluft weist der Gehäusedeckel 30 einen in Bezug zur Montageachse 40 der Luftentölvorrichtung 300 radial außerhalb der Reinluftauslassöffnung 32 angeordneten zweiten Gasdurchlass 34 auf. Dieser zweite Gasdurchlass 34 ist der Rohseite der Luftentölbox zugeordnet.

Zum Abführen des abgeschiedenen Öls aus der Luftentölbox 100 weist der Verbindungsnippel 200 einen sich vom Innenraum des Abscheideelements 100 zum Anschlusskopf 410 des Verbindungsnippels hin erstreckenden Fluidablaufkanal 220 auf. Dieser Fluidablaufkanal 220 ist innerhalb des Verbindungsnippels angeordnet, nämlich zwischen dem rohrförmigen Reinfluidauslass 210 und einer den rohrförmigen Reinfluidauslass 210 umgebenden radial äußeren Umfangsseite 230 des Verbindungsnippels 200.

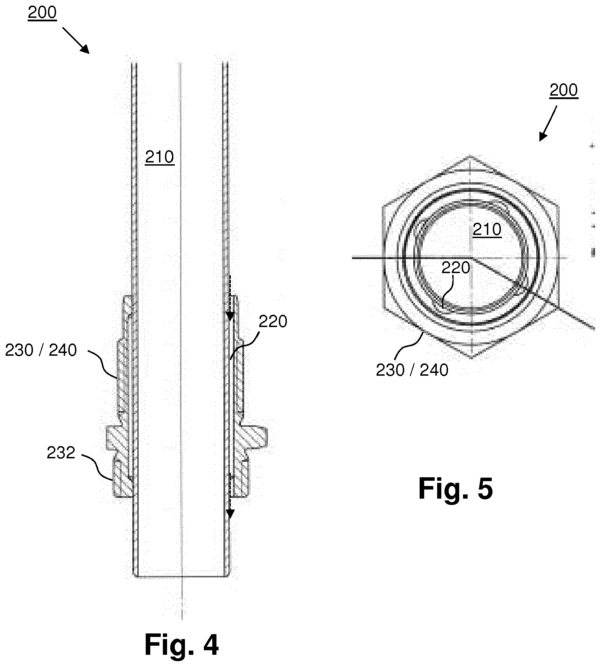

Der Strömungsweg der Luft in der Luftentölvorrichtung 300 ist in Figur 3 mittels Blockpfeilen dargestellt. Rohluft strömt durch den Rohlufteinlass 34 in das Gehäuse ein, tritt seitlich am Filterelement 10, 20 hoch und durchströmt dieses von außen nach innen. Das im Filterelement 10, 20 abgeschiedene Öl sammelt sich in einer Ringmulde 54 der unteren Endscheibe 50 zu einer definierten Höhe, strömt dann in den Fluidablaufkanal 220 zwischen Reinfluidauslass 210 und einem den Reinfluidauslass 210 umgebenden Bereich des Verbindungsnippels 200 und wird dann abgeführt. Der Strömungsweg des Fluids in der Luftentölvorrichtung 300 ist in Figur 3 mittels gestrichelten Pfeilen dargestellt. In Figur 4 ist der Strömungsweg des Fluids im Fluidablaufkanal 220 des Verbindungsnippels 200 mittels gestrichelten Pfeilen dargestellt.

In der Regel ist die Luftentölvorrichtung 300 betriebsbereit in der Orientierung angeordnet, die in den Fig. 1 und Fig. 3 gezeigt ist. Sie kann jedoch auch in anderen Orientierungen angeordnet sein. Wenn im Folgenden von unten, oben oder dergleichen die Rede ist, so bezieht sich dies, wenn nicht anders erwähnt, auf die Darstellung in den Fig. 1 und Fig. 3.

Das Gehäuse 90, das Filterelement 10, 20 und der Verbindungsnippel 200 sind bei der betriebsbereit montierten Luftentölvorrichtung 300 jeweils koaxial zu einer gedachten Montageachse 40. Um die Montageachse 40 kann das Luftentölelement 100 mittels des Verbindungsnippels 200 auf den Anschlusskopf 410 geschraubt und von diesem abgeschraubt werden.

Wenn im Folgenden von radial, axial, koaxial oder umfangsmäßig oder dergleichen die Rede ist, so bezieht sich dies, falls nicht anders erwähnt, auf die Montageachse 40.

Die dem Gehäusedeckel 30 zugewandte untere Endscheibe 50 ist etwa ringförmig. Sie weist eine koaxiale Montageöffnung oder Durchstrecköffnung 60 für den Verbindungsnippel 200 auf. Radial zwischen der Durchstrecköffnung 60 und dem Filtermedium 10, 20 des Filterelements ist die untere Endscheibe 50 mehrfach gebogen, so dass sich eine umfangsmäßige Ringmulde 54 ergibt, die zu einem Elementinnenraum 24 des Filterelements 10, 20 hin offen ist.

Ein radial innerer Kragen 62 der unteren Endscheibe 50 umgibt die Durchstrecköffnung 60. Er zeigt zu dem in der Durchstrecköffnung 60 angeordneten Verbindungsnippel 200. Um die Montage des Abscheideelements 100 zu erleichtern, kann der radial innere Kragen 62 der unteren Endscheibe 50 zur Abstützung am Verbindungsnippel 200 ausgebildet sein. Bei diesem in den Figuren 1 bis 6 gezeigten vorteilhaften Ausführungsbeispiel dient der sich radial erstreckende innere Kragen 62 oder der sich in Richtung zum Verbindungsnippel 200 hin erstreckende innere Kragen 62 zur Abstützung der unteren Endscheibe 50 an der äußeren Umfangsseite 230 des Verbindungsnippels 200. Dies ist hilfreich, wenn bei der Montage des Abscheideelements 100 der Gehäusedeckel 30 an der äußeren Umfangsseite 230 des Verbindungsnippels 200 entlanggeführt wird, bis das Gewinde 36 des Gehäusedeckels 30 mit dem Gewinde 232 des Verbindungsnippels 200 in Kontakt tritt.

Ein Innendurchmesser der Durchstrecköffnung 60 ist größer als ein Außendurchmesser des Verbindungsnippels 200 dort. Zwischen der radial äußeren Umfangswand 230 des Verbindungsnippels 200 und dem radial inneren Rand der Durchstrecköffnung 60 verbleibt ein ringförmiger, koaxialer Spalt 272.

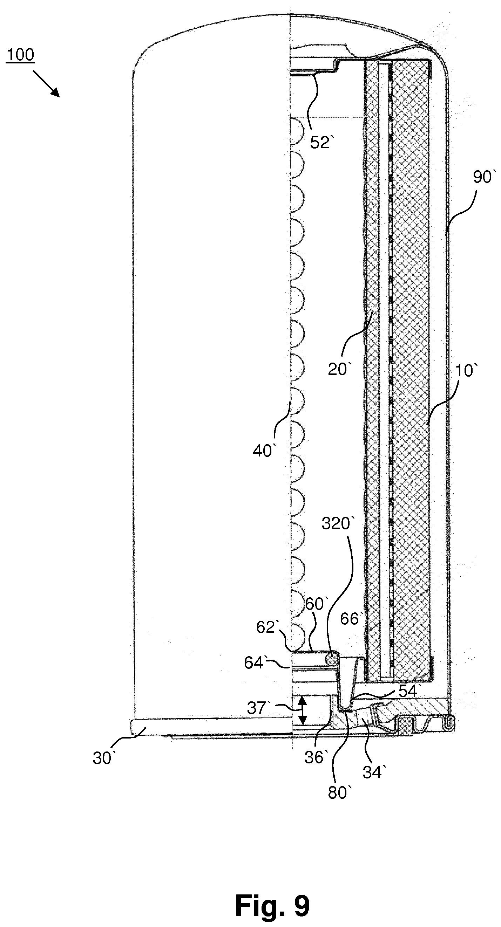

Im Gegensatz zur in den Figuren 8 und 9 gezeigten und im Kapitel "Stand der Technik beschriebenen" Abscheidevorrichtung aus dem Stand der Technik, ist bei der vorliegenden Erfindung der koaxiale Spalt 272 dichtelementfrei. Der koaxiale Spalt 272 ist also nicht mittels einem aus dem Stand der Technik bekannten, zwischen der unteren Endscheibe 50' und der radial äußeren Umfangsseite 230' des Verbindungsnippels 200' angeordneten Dichtring 320' oder O-Ring (vgl. Figuren 8 bis 10) abgedichtet.

Vorteilhafterweise beträgt die Breite des koaxialen Spalts 272 weniger als 3 mm, bevorzugt weniger als 2 mm und besonders bevorzugt weniger als 1 mm, um lokal eine Drosselwirkung zu erzeugen und damit den Ölfluss und Gasaustausch zwischen dem Verbindungsnippel 200 und dem Abscheideelement 100 zu minimieren.

Um Ölfluss und Gasaustausch zwischen dem Verbindungsnippel 200 und dem Abscheideelement 100 optimal zu minimieren, beträgt die Breite des koaxialen Spalts 272 zwischen dem Kragen 62 der unteren Endscheibe 50 und dem in der Durchstrecköffnung 60 angeordneten Verbindungsnippel 200 höchstens ein Prozent des Radius und bevorzugt höchstens ein Prozent des Durchmessers des in der Durchstrecköffnung 60 angeordneten Verbindungsnippels 200. Beispielhafte Durchmesser des Verbindungsnippels 200 liegen im Bereich von 10 mm bis 50 mm, bevorzugt im Bereich von 20 mm bis 30 mm oder bis 40 mm. Durch diese Abstimmung ist auch eine gewisse Abstützung des Verbindungsnippels 200 gewährleistet, wodurch die Montage erleichtert wird.

Vorteilhafterweise beträgt die Breite des koaxialen Spalts 272 jedoch nicht weniger als 0,1 mm, da ansonsten die Montage erschwert wird.

Beim in den Figuren 8 bis 10 dargestellten Stand der Technik ist der Abstand des radial innerer Kragens 62 der unteren Endscheibe 50 zum Verbindungsnippel 200 nicht so eng abgestimmt, weil unterhalb des Kragens 62 der unteren Endscheibe 50 der O-Ring 320' eingeklemmt wird und dieser O-Ring 320' den Spalt 272 zwischen dem Kragen 62 der unteren Endscheibe 50 und dem Verbindungsnippel 200 abdichtet. In seinem Zentrum weist der Gehäusedeckel 30 die koaxiale Reinluftauslassöffnung 32 auf. Diese Reinluftauslassöffnung 32 ist zur Aufnahme des Verbindungsnippels 200 ausgebildet. Eine radial innere, die Reinluftauslassöffnung 32 umgebende Umfangswand des Gehäusedeckels 30 ist mit einem Innengewinde 36 ausgestattet. Das Innengewinde 36 passt zu einem entsprechenden Außengewinde 232 an der radial äußeren Umfangsseite des Verbindungsnippels 200.

Von dem in der Ringmulde 54 gesammeltem Öl läuft nur wenig Öl in den Spalt 272 zwischen der unteren Endscheibe 50 und dem Verbindungsnippel 200. Die Dichtheit des aus dem Gehäusedeckelgewinde 36 und dem Verbindungselementgewinde 232 gebildeten Befestigungsgewindes der Abscheidevorrichtung 300 ist so groß, dass sich das Öl auch ohne den aus dem Stand der Technik bekannten O-Ring 320' (vgl. Figuren 8 bis 10) ansammelt und über den Fluidablaufkanal 220 abläuft.

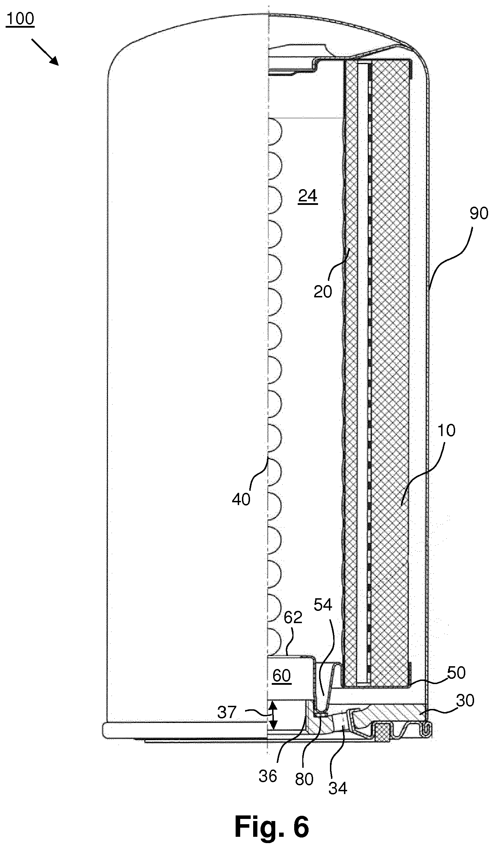

In den Figuren 1 bis 3 ist dort, wo im Stand der Technik die Nut oder die Kammer zur Aufnahme des bei der vorliegenden Erfindung weggelassenen O-Rings 320' ist, diese immer noch zu sehen. In den Figuren 1 bis 3 ist nämlich ein weiteres, beispielsweise separat angeschweißtes oder angelötetes, Stegelement 64 zu sehen. Dieses weitere Stegelement 64 kann nun auch weggelassen werden (vgl. Figur 6), oder aber als Element einer Labyrinthdichtung genutzt werden (vgl. Figuren 1, 2, 3 und 7).

Eine Labyrinthdichtung, beispielsweise eine Speichen-Labyrinthdichtung, kann durch eine unterhalb des Kragens 62 der ersten Endscheibe 50 angeordnete Kante, beispielsweise durch das weitere Stegelement 64 realisiert werden. So erfolgt ein Druckabbau über das Speichen-Labyrinth bzw. die Kammerung der Labyrinthdichtung und dann nochmal über die einzelnen Gewindegänge des Befestigungsgewindes 36, 232 der Abscheidevorrichtung 300. Auch die Gewindegänge des Befestigungsgewindes 36, 232 wirken wie eine Labyrinthdichtung, da sie den Strömungsweg des Fluids durch die Reinluftauslassöffnung 32 des Gehäusedeckels 30 verlängern. Insgesamt bildet also das Befestigungsgewinde 36, 232 gemeinsam mit dem Kragen 62, dem weiteren Stegelement 64 und dem in der Durchstrecköffnung 60 angeordneten Verbindungsnippel 200 eine große Labyrinth-Dichtung, die dann eine ausreichende Dichtheit sicherstellt.

Je länger die Gewindegänge des Befestigungsgewindes 36, 232 sind, desto größer kann der Spalt 272 zwischen der unteren Endscheibe 50 und dem Verbindungsnippel 200 ausgebildet sein und umgekehrt.

Die die Ringmulde 54 begrenzende axiale Außenseite der unteren Endscheibe 50 überragt das Filtermedium 10, 20 in axialer Richtung. Ein die Talsohle der Ringmulde 54 bildender Abschnitt der Außenseite der unteren Endscheibe 50 liegt umfangsmäßig zusammenhängend in axialer Richtung an einem Dichtungs- und Dämpfungselement, nämlich an einem Dichtungs- und Dämpfungsring 80, an. Der Dichtungs- und Dämpfungsring 80 stützt sich auf der axial gegenüberliegenden Seite an einer Innenseite des Gehäusedeckels 30 ab. Der Dichtungs- und Dämpfungsring 80 ist koaxial zur Montageachse 40. Bei der vorliegenden Erfindung ist der Dichtungs- und Dämpfungsring 80 dazu ausgebildet die Rohseite des Luftentölelements 100 von der Reinseite des Luftentölelements 100 zu trennen. Hierzu ist der Dichtungs- und Dämpfungsring 80 dichtend zwischen der unteren Endscheibe 50 und dem Gehäusedeckel 30 verpresst. Der zwischen Gehäusedeckel 30 und unterer Endscheibe 50 angeordnete Dichtungs- und Dämpfungsring 80 verhindert, dass Luft vom Rohfluideinlass durch den Spalt 272 zwischen der unteren Endscheibe 50 und dem Verbindungsnippel 200 und von dort in den Ölsammelraum der Ringmulde 54 der unteren Endscheibe strömt.

Des Weiteren dient der Dichtungs- und Dämpfungsring 80 zur Dämpfung von betriebsbedingten Vibrationen oder Schwingungen des Abscheideelements 100 und verhindert so, dass Klappergeräusche entstehen. Zudem dient der Dichtungs- und Dämpfungsring 80 als Toleranzausgleich.

Die in den Figuren 1 bis 7 dargestellte Abscheidevorrichtung 300 unterscheidet sich von der in den Figuren 8 und 9 dargestellten Abscheidevorrichtung 300' dadurch, dass der Dichtungs- und Dämpfungsring 80 dazu ausgebildet ist, sowohl die Aufgabe als Klapperschutz zu übernehmen als auch die Aufgabe des Trennens der Roh- und der Reinseite zu übernehmen. Der aus dem Stand der Technik bekannte O Ring 320' kann aufgrund entsprechender Modifikation der Konstruktion entfallen. Der hierdurch entstehende Ölfluss durch das Befestigungsgewinde 36, 232, lässt sich durch entsprechende konstruktive Abstimmung der unteren Endscheibe 50 zum Verbindungsnippel 200, soweit reduzieren, dass dieser für die Funktion nicht weiter relevant ist.

Bei dem in den Figuren 1 bis 7 gezeigten Ausführungsbeispiel eines Abscheideelements 100 der vorliegenden Erfindung übernimmt also das aus dem Stand der Technik bekannte Dämpfungselement 80' zusätzlich die Dichtfunktion des aus dem Stand der Technik bekannte O-Rings 320', wodurch dieser entfallen kann. Ohne den O-Ring 320' aus dem Stand der Technik kann das Abscheideelement 100 leichter in der Abscheidevorrichtung 300 montiert und demontiert werden.

### Bezugszeichen

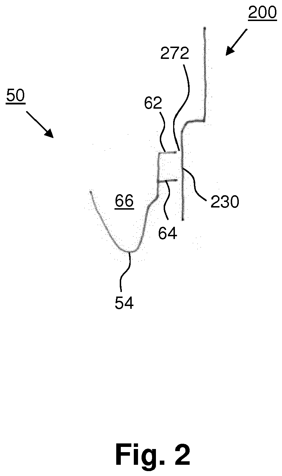

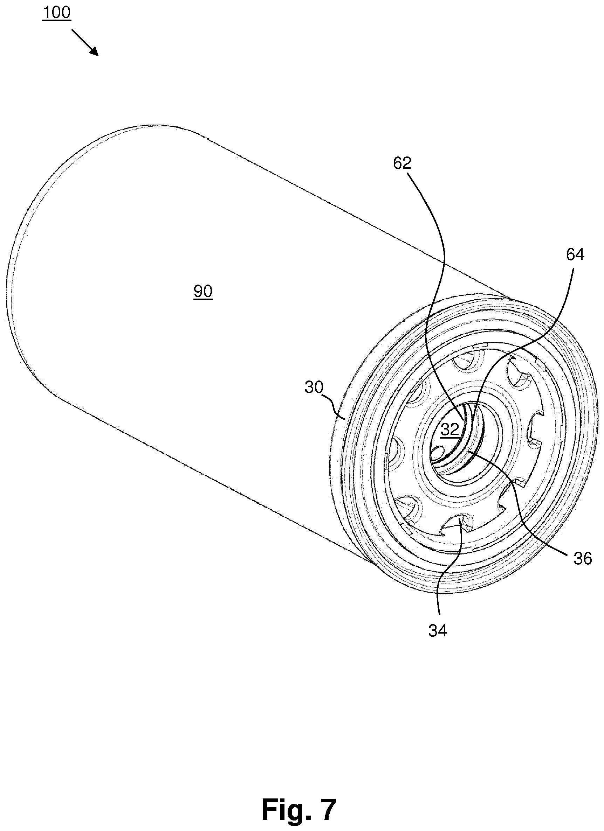

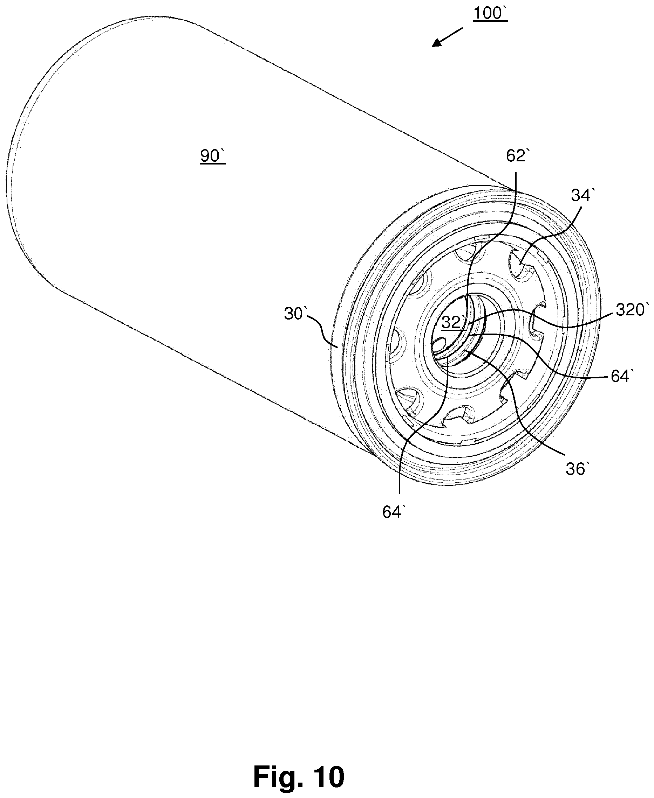

10 erstes Filterelement oder erstes Filtermedium des, insbesondere als ringförmiger Coalescer ausgebildeten, Abscheideelements, insbesondere mehrfach gewickelte Glasfaser; vgl. Figuren 1, 3 und 6
10' erstes Filtermedium des, insbesondere als ringförmiger Coalescer ausgebildeten, Abscheideelements aus dem Stand der Technik; vgl. Figuren 8 und 9
20 weiteres Filterelement oder weiteres Filtermedium des, insbesondere als ringförmiger Coalescer ausgebildeten, Abscheideelements, insbesondere Vlies; vgl. Figuren 1, 3 und 6
20' weiteres Filtermedium des, insbesondere als ringförmiger Coalescer ausgebildeten, Abscheideelements aus dem Stand der Technik; vgl. Figuren 8 und 9
24 Elementinnenraum des Filterelements 10, 20; vgl. Figuren 1, 3 und 6
30 Gehäusedeckel oder Gewindeplatte oder Gewindedeckel oder Bodenplatte der Abscheidevorrichtung 300; vgl. Figuren 1, 3, 6 und 7
30' Gehäusedeckel oder Gewindeplatte oder Gewindedeckel oder Bodenplatte der Abscheidevorrichtung 300' aus dem Stand der Technik; vgl. Figuren 8, 9 und 10
32 erster Gasdurchlass, insbesondere Reinluftauslass, des Gehäusedeckels 30; vgl. Figur 7 32' erster Gasdurchlass des Gehäusedeckels 30' aus dem Stand der Technik; vgl. Figur 10 34 zweiter Gasdurchlass, insbesondere Rohlufteinlass, beispielsweise rohseitige Einlassöffnung, des Gehäusedeckels 30; vgl. Figuren 3, 6 und 7
34' zweiter Gasdurchlass des Gehäusedeckels 30' aus dem Stand der Technik; vgl. Figuren 9 und 10
36 Gewinde, insbesondere Innengewinde, des Gehäusedeckels 30; vgl. Figuren 1, 3, 6 und 7
36' Gewinde, insbesondere Innengewinde, des Gehäusedeckels 30' aus dem Stand der Technik; vgl. Figuren 8, 9 und 10
37 Profilhöhe oder Gewindehöhe des Gehäusedeckelgewindes 36 des Gehäuses 100 der vorliegenden Erfindung; vgl. Figur 6
37' Profilhöhe des Gehäusedeckelgewindes 36' des Gehäuses 100' aus dem Stand der Technik; vgl. Figur 9
40 Montageachse des Abscheideelements 100, insbesondere Längsachse des Gehäuses 90, beispielsweise Längsachse des Abscheideelements 100, an der Anschlusseinrichtung; vgl. Figuren 1, 3 und 6
40' Montageachse des Abscheideelements 100', insbesondere Längsachse des Gehäuses 90', beispielsweise Längsachse des Gehäuses 90' aus dem Stand der Technik; vgl. Figuren 8 und 9
50 dem Gehäusedeckel 30 zugewandte erste, insbesondere fußseitige oder untere, Endscheibe des Abscheideelements 10, 20, beispielsweise erster Elementboden des Abscheideelements 10, 20; vgl. Figuren 1, 3 und 6
50' dem Gehäusedeckel 30' zugewandte erste, insbesondere fußseitige oder untere, Endscheibe des Abscheideelements 10', 20' aus dem Stand der Technik; vgl. Figuren 8 und 9
52 vom Gehäusedeckel 30 abgewandte weitere, insbesondere stirnseitige oder obere, Endscheibe des Abscheideelements 10, 20, beispielsweise weiterer Elementboden des Abscheideelements 10, 20; vgl. Figuren 1 und 6
52' vom Gehäusedeckel 30 abgewandte weitere, insbesondere stirnseitige oder obere, Endscheibe des Abscheideelements 10', 20' aus dem Stand der Technik; vgl. Figuren 8 und 9
54 Ringmulde der ersten Endscheibe 50; vgl. Figuren 1, 3 und 6
54' Ringmulde der ersten Endscheibe 50'; vgl. Figuren 8 und 9
60 Montageöffnung oder Durchstrecköffnung der ersten Endscheibe 50; vgl. Figur 6
60' Montageöffnung oder Durchstrecköffnung der ersten Endscheibe 50' aus dem Stand der Technik; vgl. Figur 9
62 innerer Randbereich, insbesondere Stegelement oder Kragen, beispielsweise zur Abstützung des Verbindungselements 200 bei der Montage ausgebildete Abstützkontur, der Durchstrecköffnung 60 der ersten Endscheibe 50; vgl. Figuren 1, 2, 3, 6 und 7
62' innerer Randbereich, insbesondere Stegelement oder Kragen, beispielsweise zur Abstützung des Verbindungselements 200 bei der Montage ausgebildete Abstützkontur der ersten Endscheibe 50' aus dem Stand der Technik; vgl. Figuren 8 und 9
64 weiteres Stegelement oder weiterer Kragen der ersten Endscheibe 50 des Gehäuses 90 der vorliegenden Erfindung; vgl. Figuren 1, 2, 3 und 7
64' weiteres Stegelement oder weiterer Kragen der ersten Endscheibe 50 des Gehäuses 90' aus dem Stand der Technik; vgl. Figuren 8, 9 und 10
66 Fluidstauraum, insbesondere Flüssigkeitsstauraum oder Flüssigkeitssammelraum des Gehäuses 90 der vorliegenden Erfindung; vgl. Figuren 1 und 3
66' Fluidstauraum des Gehäuses 90' aus dem Stand der Technik; vgl. Figuren 8 und 9 80 Dichtungs- und Dämpfungselement, insbesondere Dichtungs- und Dämpfungsring, des Gehäuses 90 der vorliegenden Erfindung; vgl. Figuren 1, 3 und 6
80' Dämpfungselement, insbesondere Dämpfungsring, des Gehäuses 90' aus dem Stand der Technik; vgl. Figuren 8 und 9
90 Gehäuse, insbesondere becherförmiges oder haubenförmiges oder kreiszylindrisches Gehäuse, des Abscheideelements 100 vgl. Figuren 1, 3, 6 und 7
90' Gehäuse des Abscheideelements 100' aus dem Stand der Technik; vgl. Figuren 8, 9 und 10
92 zum Toleranzausgleich ausgebildete Feder des Abscheideelements 100 der vorliegenden Erfindung; vgl. Figur 1
92' zum Toleranzausgleich ausgebildete Feder des Abscheideelements 100' aus dem Stand der Technik; vgl. Figur 1
100 Abscheideelement, insbesondere Luftentölbox; vgl. Figuren 6 und 7
100' Abscheideelement aus dem Stand der Technik; vgl. Figuren 9 und 10
200 Verbindungselement, insbesondere Verbindungsnippel oder Verbindungsrohrstutzen, beispielsweise Nippel; vgl. Figuren 4 und 5
200' Verbindungselement, insbesondere Verbindungsnippel oder Verbindungsrohrstutzen, aus dem Stand der Technik; vgl. Figur 8
210 gasführender Innenraum des Verbindungselements 200, insbesondere rohrförmiger Reinfluidauslass oder Reinfluidauslassrohr des Verbindungselements 200; vgl. Figuren 1, 3, 4, und 5
210' gasführender Innenraum, insbesondere rohrförmiger Reinfluidauslass oder Reinfluidauslassrohr, des Verbindungselements 200' beim Stand der Technik; vgl. Figur 8
220 Fluidablaufkanal, insbesondere Flüssigkeitsablaufkanal, zum Abführen des abgeschiedenen Fluids aus der Abscheidevorrichtung 300, insbesondere aus dem Abscheideelement 100, insbesondere Spalt zwischen Reinfluidauslassrohr 210 und radial äußerer Umfangsseite 230 des Verbindungselements 200; vgl. Figuren 1, 3, 4 und 5
220' Fluidablaufkanal beim Stand der Technik; vgl. Figur 8
230 radial äußere Umfangsseite des Verbindungselements 200; vgl. Figuren 1, 3, 4 und 5
230' radial äußere Umfangsseite des Verbindungselements 200' aus dem Stand der Technik; vgl. Figur 8
232 Gewinde des Verbindungselements 200; vgl. Figuren 1, 3 und 4
232' Gewinde des Verbindungselements 200' aus dem Stand der Technik; vgl. Figur 8
240 Dichtfläche der radial äußeren Umfangsseite 230 des Verbindungselements 200 der vorliegenden Erfindung; vgl. Figuren 4 und 5
240' Dichtfläche der radial äußeren Umfangsseite 230' des Verbindungselements 200' aus dem Stand der Technik; vgl. Figur 8
272 Abstand zwischen der in Gebrauchsstellung der Abscheidevorrichtung 300 im ersten Gasdurchlass 32 angeordneten und in Bezug zur Montageachse 40 radial äußeren Umfangswand 230 des Verbindungselements 200 zu dem in Bezug zur Montageachse 40 radial inneren Randbereich des ersten Gasdurchlasses 32, insbesondere Abstand zwischen der in der Durchstrecköffnung 60 angeordneten radial äußeren Umfangswand des gasleitenden Innenraums 210 des Verbindungselements 200 und dem radial inneren Randbereich 62 der ersten Endscheibe 50, beispielsweise zwischen der ersten Endscheibe 50 und dem Verbindungselement 200 angeordneter Spalt der Durchstrecköffnung 60; vgl. Figur 2
300 Abscheidevorrichtung zur Abscheidung wenigstens eines Fluids, insbesondere von Öl, aus Gas, insbesondere aus Luft, insbesondere Luftentölbox oder Luftentölelement; vgl. Figuren 1 und 3
300' Abscheidevorrichtung zur Abscheidung wenigstens eines Fluids, insbesondere von Öl, aus Gas, insbesondere aus Luft, insbesondere Luftentölbox oder Luftentölelement aus dem Stand der Technik; vgl. Figur 8
320' Dichtring zum Abdichten der Rohseite der Luftentölbox gegenüber der Reinseite der Luftentölbox 100' aus dem Stand der Technik, insbesondere O-Ring zum Abdichten der ersten Endscheibe 50' des Abscheideelements gegenüber dem Verbindungselement 200'; vgl. Figuren 8 und 9
400 Anschlusseinrichtung oder Anschlusselement, insbesondere Kompressor, Druckluftanlage oder Vakuumpumpe; vgl. Figur 3
410 Anschlusskopf, insbesondere Filterkopf, des Anschlusselements 400; vgl. Figur 3

## Patentansprüche

1. Abscheidevorrichtung (300) zur Abscheidung wenigstens einer Flüssigkeit aus Gas, aufweisend
- mindestens einen zum Abführen der abgeschiedenen Flüssigkeit aus der Abscheidevorrichtung (300) ausgebildeten Fluidablaufkanal (220),
- mindestens ein zur Verbindung eines Abscheideelements (100) der Abscheidevorrichtung (300) mit einer Anschlusseinrichtung (400) ausgebildetes Verbindungselement (200) und
- das Abscheideelement (100) mit einem Gehäuse (90) und mindestens einem darin angeordnetem Filterelement (10, 20) und mit einem zum Verschließen einer Stirnseite des Gehäuses (90) ausgebildeten Gehäusedeckel (30) mit
-- mindestens einem ersten Gasdurchlass (32), der in Bezug zu einer Montageachse (40) des Abscheideelements (100) an der Anschlusseinrichtung (400) zentral, insbesondere koaxial, angeordnet ist,
-- einem dem ersten Gasdurchlass (32) zugeordneten Gewinde (36), wobei dieses Gehäusedeckelgewinde (36) zum Aufschrauben auf ein Gewinde (232) des Verbindungselements (200) ausgebildet ist und
-- mindestens einem zweiten Gasdurchlass (34), der in Bezug zur Montageachse (40) des Abscheideelements (100) radial außerhalb des ersten Gasdurchlasses (32) angeordnet ist,
wobei
- das Gehäusedeckelgewinde (36) und das Verbindungselementgewinde (232) in Gebrauchsstellung der Abscheidevorrichtung (300) im Wesentlichen dicht miteinander verbunden sind und
- der Fluidablaufkanal (220) innerhalb des Verbindungselements (200) angeordnet ist.
**dadurch gekennzeichnet, dass**
- das Filterelement (10, 20) eine sich in Bezug zur Montageachse (40) des Abscheideelements (100) radial erstreckende und dem Gehäusedeckel (30) zugewandte Stirnseite aufweist, welche durch eine erste Endscheibe (50) begrenzt ist,
- die erste Endscheibe (50) eine zum Durchführen des Verbindungselements (200) ausgebildete und dem ersten Gasdurchlass (32) zugeordnete Durchstrecköffnung (60) aufweist, wobei die Durchstrecköffnung (60) von einem in Bezug zur Montageachse (40) des Abscheideelements (100) radial inneren Randbereich (62) der ersten Endscheibe (50) begrenzt ist,
- mindestens ein Dichtungs- und Dämpfungselement (80) zur Abdichtung einer Reinseite des Abscheideelements (100) von einer ungereinigtes Fluid aufweisenden Rohseite des Gehäuses (100) und zum Abdämpfen in Bezug zur Montageachse (40) des Abscheideelements (100) axial gerichteter Schwingungen des Filterelements (10, 20) zwischen dem Filterelement (10, 20) und der dem Innenraum des Gehäuses (90) zugewandten Innenseite des Gehäusedeckels (30) dichtend verpresst ist, und
- das Verbindungselement (200) und die erste Endscheibe (50), insbesondere das Verbindungselement (200) und die Durchstrecköffnung (60), insbesondere das Verbindungselement (200) und ein radial innerer, insbesondere kreisförmiger Randbereich (62) in Gebrauchsstellung der Abscheidevorrichtung (300) derart kontaktlos sind, dass Gehäusedeckelgewinde (36) und Innenraum des Filterelements (10, 20) gedrosselt fluidverbunden sind.

2. Abscheidevorrichtung nach Anspruch 1, **dadurch gekennzeichnet, dass**
- das Filterelement (10, 20) eine sich in Bezug zur Montageachse (40) des Abscheideelements (100) radial erstreckende und dem Gehäusedeckel (30) zugewandte Stirnseite aufweist, welche durch eine erste Endscheibe (50) begrenzt ist,
- die erste Endscheibe (50) eine zum Durchführen des Verbindungselements (200) ausgebildete und dem ersten Gasdurchlass (32) zugeordnete Durchstrecköffnung (60) aufweist, wobei die Durchstrecköffnung (60) von einem in Bezug zur Montageachse (40) des Abscheideelements (100) radial inneren Randbereich (62) der ersten Endscheibe (50) umgeben ist, und
- das Verbindungselement (200) sich in Gebrauchsstellung der Abscheidevorrichtung (300) durch die Durchstrecköffnung (60) der ersten Endscheibe (50) erstreckt, wobei das Verbindungselement (200) im Bereich der Durchstrecköffnung (60) derart in Bezug zum Filterelement (10, 20) angeordnet ist, dass ein Spalt mit einem Abstand (272) zwischen radial äußerer Umfangswand (230) des Verbindungselements (200) und dem radial inneren, insbesondere kreisförmigen Randbereich (62) gebildet ist, der Gehäusedeckelgewinde (36) und den Innenraum des Filterelements (10, 20) fluidisch, insbesondere drosselnd verbindet.

3. Abscheidevorrichtung nach Anspruch 2, **dadurch gekennzeichnet, dass** der Abstand (272) zwischen der in Bezug zur Montageachse (40) des Abscheideelements (100) radial äußeren Umfangswand (230) des Verbindungselements (200) und dem radial inneren, insbesondere kreisförmigen Randbereich (62) der ersten Endscheibe (50) höchstens etwa ein Prozent des Durchmessers der in der Durchstrecköffnung (60) angeordneten radial äußeren Umfangswand (230) des Verbindungselements (200) beträgt.

4. Abscheidevorrichtung nach einem der vorhergehenden Ansprüche, **dadurch gekennzeichnet, dass** das Abscheideelement (100) aufweist
- ein Gehäuse (90) mit mindestens einem im Gehäuse (90) angeordneten Filterelement (10, 20) zur Abscheidung wenigstens einer Flüssigkeit aus Gas und
- einen zum Verschließen einer Stirnseite des Gehäuses (90) ausgebildeten Gehäusedeckel (30) mit
-- mindestens einem ersten Gasdurchlass (32), der in Bezug zu einer Montageachse (40) des Abscheideelements (100) an einer Anschlusseinrichtung, zentral, insbesondere koaxial, angeordnet ist,
-- einem dem ersten Gasdurchlass (32) zugeordneten Gewinde (36), wobei das Gehäusedeckelgewinde (36) zum Aufschrauben auf ein Gewinde (232) eines zur Verbindung des Abscheideelements (100) mit der Anschlusseinrichtung ausgebildeten Verbindungselements (200) ausgebildet ist, und
-- mindestens einem zweiten Gasdurchlass (34), der in Bezug zur Montageachse (40) des Abscheideelements (100) radial außerhalb des ersten Gasdurchlasses (32) angeordnet ist, wobei
- der erste Gasdurchlass (32) und der zweite Gasdurchlass (34) die einzigen Öffnungen des Gehäusedeckels (30) sind und der Gehäusedeckel (30) ansonsten vollständig geschlossen ist und
- das Gehäusedeckelgewinde (36) zum im Wesentlichen dichtenden Eingriff mit dem Verbindungselementgewinde (232) ausgebildet ist.

5. Abscheidevorrichtung nach Anspruch 4, **dadurch gekennzeichnet, dass** der erste Gasdurchlass (32) des Gehäusedeckels (30) zylinderförmig ausgebildet ist und das Gehäusedeckelgewinde (36) mindestens einen Gewindegang aufweist, der sich fortlaufend helixartig um den Mantel des zylinderförmig ausgebildeten ersten Gasdurchlasses (32) des Gehäusedeckels (30) windet und vollständig geschlossen, also frei von Einschnitten oder Unterbrechungen, ausgebildet ist.

6. Abscheidevorrichtung nach Anspruch 4 oder 5, **dadurch gekennzeichnet, dass** die Einschraubtiefe des Gehäusedeckelgewindes (36) mindestens ein Drittel des Durchmessers des ersten Gasdurchlasses (32) beträgt.

7. Abscheidevorrichtung nach mindestens einem der Ansprüche 4 bis 6, **dadurch gekennzeichnet, dass** das Gehäusedeckelgewinde (36) in der Toleranzklasse mittel (m) nach DIN ISO 965-1, insbesondere in der Toleranzklasse M39 nach DIN ISO 965-1, oder in der Toleranzklasse fein (f) nach DIN ISO
965-1, ausgeführt ist.

8. Abscheidevorrichtung nach mindestens einem der Ansprüche 4 bis 7, **dadurch gekennzeichnet, dass** zum Verstärken der Dichtwirkung des Gehäusedeckelgewindes (36) mindestens ein Gewindedicht-mittel im Bereich mindestens eines Gewindegangs des Gehäusedeckelgewindes (36) angeordnet ist.

9. Abscheidevorrichtung nach mindestens einem der Ansprüche 4 bis 8, **dadurch gekennzeichnet, dass** das Filterelement (10, 20) eine sich in Bezug zur Montageachse (40) des Abscheideelements (100) radial erstreckende und dem Gehäusedeckel (30) zugewandte Stirnseite aufweist, welche durch eine erste Endscheibe (50) begrenzt ist, wobei die erste Endscheibe (50)
- eine dem ersten Gasdurchlass (32) zugeordnete, zum Aufnehmen des Verbindungselements (200) ausgebildete Durchstrecköffnung (60) aufweist und
- einen die Durchstrecköffnung (60) umgebenden sich in Bezug zur Montageachse (40) des Abscheideelements (100) radial erstreckenden, kreisförmigen inneren Randbereich (62) aufweist.

10. Abscheidevorrichtung nach Anspruch 9, **dadurch gekennzeichnet, dass** die erste Endscheibe (50) so ausgestaltet und/oder der Durchmesser des inneren Randbereichs (62) so gewählt ist, dass erste Endscheibe (50) und Verbindungselement (200) in Gebrauchsstellung kontaktlos sind.

11. Abscheidevorrichtung nach Anspruch 9 oder 10, **dadurch gekennzeichnet, dass** der innere Randbereich (62) der ersten Endscheibe (50) mindestens ein die Durchstrecköffnung (60) umgebendes, in Bezug zur Montageachse (40) des Abscheideelements (100) sich radial nach innen erstreckendes, eine kreisförmige Öffnung umschließendes erstes Stegelement ist oder aufweist und die erste Endscheibe (50) bevorzugt mindestens ein die Durchstrecköffnung (60) umgebendes, in Bezug zur Montageachse (40) des Abscheideelements (100) sich radial nach innen erstreckendes weiteres Stegelement (64) aufweist, wobei das erste Stegelement (62) und das weitere Stegelement (64) derart in Bezug zur Montageachse (40) des Abscheideelements (100) axial versetzt zueinander angeordnet sind, dass sie in Gebrauchsstellung des Abscheideelements (100) mindestens einen Fluidstauraum (66) bilden, wobei dieser Fluidstauraum dazu ausgebildet ist vom Filterelement (10, 20) abgeschiedene Flüssigkeit, welches in die Durchstrecköffnung (60) fließt, zu drosseln, zu stauen oder zu sammeln.

12. Abscheidevorrichtung nach mindestens einem der Ansprüche 4 bis 11, **dadurch gekennzeichnet, dass** das Abscheideelement (100) mindestens ein Labyrinthdichtungselement (62, 64) aufweist, das dazu ausgebildet ist mit der radial äußeren Umfangswand des sich in Gebrauchsstellung des Verbindungselements (200) durch den ersten Gasdurchlass (32) erstreckenden Verbindungselements (200) nach Art einer Labyrinthdichtung derart zusammenzuwirken, dass der erste Gasdurchlass (32) im Wesentlichen fluidundurchlässig ist, insbesondere Abscheideelement nach Anspruch 14, **dadurch gekennzeichnet, dass** das erste Stegelement (62) und das weitere Stegelement (64) dazu ausgebildet sind nach Art einer Labyrinthdichtung mit dem in Gebrauchsstellung des Abscheideelements (100) sich durch die Durchstrecköffnung (60) erstreckenden Verbindungselement (200) derart zusammenzuwirken, dass ein zwischen der ersten Endscheibe (50) und dem Verbindungselement (200) angeordneter Spalt (272) der Durchstrecköffnung (60), im Wesentlichen fluidundurchlässig und/oder im Wesentlichen flüssigkeitsundurchlässig ist.

13. Abscheidevorrichtung nach mindestens einem der Ansprüche 4 bis 12, **dadurch gekennzeichnet, dass** das mindestens eine Dichtungs- und Dämpfungselement (80) zwischen der ersten Endscheibe (50) und der dem Innenraum des Gehäuses (90) zugewandten Innenseite des Gehäusedeckels (30) dichtend verpresst ist, wobei das Dichtungs- und Dämpfungs-element (80) dazu ausgebildet ist
- eine Reinseite des Abscheideelements (100) von einer ungereinigtes Fluid aufweisenden Rohseite des Gehäuses (100) abzudichten und
- in Bezug zur Montageachse (40) des Abscheideelements (100) axial gerichtete Schwingungen des Filterelements (10, 20) abzudämpfen.

14. Abscheidevorrichtung nach Anspruch 13, **dadurch gekennzeichnet, dass** die in Bezug zur Montageachse (40) des Abscheideelements (100) axiale Erstreckung des Dichtungs- und Dämpfungselements (80) mindestens einen Millimeter, insbesondere mindestens zwei Millimeter, beispielsweise mindestens drei Millimeter, beträgt.

15. Abscheidevorrichtung nach Anspruch 13 oder 14, **dadurch gekennzeichnet, dass** das Dichtungs- und Dämpfungselement (80) aus mindestens einem Material gebildet ist, das sowohl eine Temperaturbeständigkeit von über 100 Grad Celsius als auch eine Langzeitölbeständigkeit, insbesondere eine Ölbe-ständigkeit nach DIN EN 60811-2-1, aufweist.

## Claims

1. Separating device (300) for separating at least one liquid from gas, featuring
- at least one fluid outlet channel (220) designed for discharging the separated liquid from the separating device (300),
- at least one connecting element (200) designed for connecting a separating element (100) of the separating device (300) to a connecting means (400) and
- the separating element (100) with a housing (90) and at least one filter element (10, 20) disposed therein and with a housing cover (30) designed for closing a front face of the housing (90) with
-- at least one first gas passage (32), which is disposed centrally, in particular coaxially, with respect to an assembly axis (40) of the separating element (100) at the connecting means (400),
-- a thread (36) allocated to the first gas passage (32), wherein this housing cover thread (36) is designed to be screwed onto a thread (232) of the connecting element (200) and
-- at least one second gas passage (34), which is disposed radially outside the first gas passage (32) with respect to the assembly axis (40) of the separating element (100),
wherein
- the housing cover thread (36) and the connecting element thread (232) are substantially tightly connected to one another in the position of use of the separating device (300) and
- the fluid outlet channel (220) is disposed inside the connecting element (200). **characterized in that**
- the filter element (10, 20) features a front face extending radially with respect to the assembly axis (40) of the separating element (100) and facing the housing cover (30), which front face is limited by a first end disc (50),
- the first end disc (50) features a through-opening (60) designed for allowing passage of the connecting element (200) and allocated to the first gas passage (32), wherein the through-opening (60) is limited by a radially inner peripheral area (62) of the first end disc (50) with respect to the assembly axis (40) of the separating element (100),
- at least one sealing and damping element (80) for sealing a clean side of the separating element (100) from a raw side of the housing (100) containing unfiltered fluid and for damping axially directed oscillations of the filter element (10, 20) with respect to the assembly axis (40) of the separating element (100) is sealingly compressed between the filter element (10, 20) and the interior side of the housing cover (30) facing the interior area of the housing (90), and
- the connecting element (200) and the first end disc (50), in particular the connecting element (200) and the through-opening (60), in particular the connecting element (200) and a radially inner, in particular circular peripheral area (62) are contactless in the position of use of the separating device (300) in such a way that the housing cover thread (36) and the interior area of the filter element (10, 20) are fluidly connected in a throttled manner.

2. Separating device according to claim 1, **characterized in that**
- the filter element (10, 20) features a front face extending radially with respect to the assembly axis (40) of the separating element (100) and facing the housing cover (30), which front face is limited by a first end disc (50),
- the first end disc (50) features a through-opening (60) designed for allowing passage of the connecting element (200) and allocated to the first gas passage (32), wherein the through-opening (60) is surrounded by a radially inner peripheral area (62) of the first end disc (50) with respect to the assembly axis (40) of the separating element (100),
- the connecting element (200) extends in the position of use of the separating device (300) through the through-opening (60) of the first end disc (50), wherein the connecting element (200) is disposed in the area of the through-opening (60) in such a way with respect to the filter element (10, 20) that a gap, which connects the housing cover thread (36) and the interior area of the filter element (10, 20) fluidically, in particular in a throttled manner, is formed at a certain distance (272) between the radially outer peripheral wall (230) of the connecting element (200) and the radially inner, in particular circular peripheral wall (62).

3. Separating device according to claim 2, **characterized in that** the distance (272) between the radially outer peripheral wall (230) of the connecting element (200) with respect to the assembly axis (40) of the separating element (100) and the radially inner, in particular circular peripheral area (62) of the first end disc (50) amounts to a maximum of approximately one percent of the diameter of the radially outer peripheral wall (230) of the connecting element (200) disposed in the through-opening (60).

4. Separating device according to one of the preceding claims, **characterized in that** the separating element (100) features
- a housing (90) with at least one filter element (10, 20) disposed in the housing (90) for separating at least one liquid from gas and
- a housing cover (30) designed for closing a front face of the housing (90) with
-- at least one first gas passage (32), which is disposed centrally, in particular coaxially, with respect to an assembly axis (40) of the separating element (100) at a connecting means,
-- a thread (36) allocated to the first gas passage (32), wherein the housing cover thread (36) is designed to be screwed onto a thread (232) of a connecting element (200) designed for connecting the separating element (100) to the connecting means, and
-- at least one second gas passage (34), which is disposed radially outside the first gas passage (32) with respect to the assembly axis (40) of the separating element (100),
wherein
- the first gas passage (32) and the second gas passage (34) are the only openings of the housing cover (30) and the housing cover (30) is otherwise completely closed and
- the housing cover thread (36) is designed for substantially sealingly engage with the connecting element thread (232).

5. Separating device according to claim 4, **characterized in that** the first gas passage (32) of the housing cover (30) has a cylindrical shape and the housing cover thread (36) features at least one thread groove winding continuously helically around the circumference of the cylindrically designed first gas passage (32) of the housing cover (30) and is completely closed, therefore free of notches or discontinuities.

6. Separating device according to claim 4 or 5, **characterized in that** the length of thread engagement of the housing cover thread (36) is at least one third of the diameter of the first gas passage (32).

7. Separating device according to at least one of the claims 4 to 6, **characterized in that** the housing cover thread (36) is designed in tolerance class medium (m) according to DIN ISO 965-1, in particular in tolerance class M39 according to DIN ISO 965-1, or in tolerance class fine (f) according to DIN ISO 965-1.

8. Separating device according to at least one of the claims 4 to 7, **characterized in that** at least one thread sealing agent is disposed in the area of at least one thread groove of the housing cover thread (36) for reinforcing the sealing effect of the housing cover thread (36).

9. Separating device according to at least one of the claims 4 to 8, **characterized in that** the filter element (10, 20) features a front face extending radially with respect to the assembly axis (40) of the separating element (100) and facing the housing cover (30), which front face is limited by a first end disc (50), wherein the first end disc (50)
- features a through-opening (60) allocated to the first gas passage (32) and designed for receiving the connecting element (200) and
- features a circular inner peripheral area (62) surrounding the through-opening (60) and radially extending with respect to the assembly axis (40) of the separating element (100).

10. Separating device according to claim 9, **characterized in that** the first end disc (50) is designed such and/or the diameter of the inner peripheral area (62) is chosen such that the first end disc (50) and the connecting element (200) are without contact in the position of use.

11. Separating device according to claim 9 or 10, **characterized in that** the inner peripheral area (62) of the first end disc (50) is or features at least one first web element surrounding the through-opening (60), extending radially inwards with respect to the assembly axis (40) of the separating element (100) and surrounding a circular opening and the first end disc (50) preferably features at least another web element (64) surrounding the through-opening (60) and extending radially inwards with respect to the assembly axis (40) of the separating element (100), wherein the first web element (62) and the other web element (64) are disposed axially offset in relation to each other with respect to the assembly axis (40) of the separating element (100) in such a way that they form at least one fluid storage space (66) in the position of use of the separating element (100), wherein this fluid storage space is designed to throttle, store or collect fluid separated by the filter element (10, 20) and flowing into the through opening (60).

12. Separating device according to at least one of the claims 4 to 11, **characterized in that** the separating element (100) features at least one labyrinth seal element (62, 64) designed to interact with the radially outer peripheral wall of the connecting element (200) extending through the first gas passage (32) in the position of use of the connecting element (200) like a labyrinth seal in such a way that the first gas passage (32) is substantially fluid-impermeable, in particular separating element according to claim 14, **characterized in that** the first web element (62) and the other web element (64) are designed to interact like a labyrinth seal with the connecting element (200) extending through the through-opening (60) in the position of use of the separating element (100) in such a way that a gap (272) of the through-opening (60) disposed between the first end disc (50) and the connecting element (200) is substantially fluid-impermeable and/or substantially liquid-impermeable.

13. Separating device according to at least one of the claims 4 to 12, **characterized in that** the at least one sealing and damping element (80) is sealingly compressed between the first end disc (50) and the interior side of the housing cover (30) facing the interior area of the housing (90), wherein the sealing and damping element (80) is designed to
- seal a clean side of the separating element (100) from a raw side of the housing (100) containing an unpurified fluid and
- dampen with respect to the assembly axis (40) of the separating element (100) axially directed oscillations of the filter element (10, 20).

14. Separating device according to claim 13, **characterized in that** the axial extension of the sealing and damping element (80) with respect to the assembly axis (40) of the separating element (100) amounts to at least one millimeter, in particular to at least two millimeters, for example to at least three millimeters.

15. Separating device according to claim 13 or 14, **characterized in that** the sealing and damping element (80) is made of at least one material which features both a temperature resistance of more than 100 degrees Celsius as well as a long-term oil resistance, in particular an oil resistance according to DIN EN 60811-2-1.

## Revendications

1. Dispositif de séparation (300) pour séparer au moins un liquide d'un gaz, présentant
- au moins un canal d'évacuation des fluides (220) conçu pour évacuer le liquide séparé du dispositif de séparation (300),
- au moins un élément de raccordement (200) conçu pour raccorder un élément de séparation (100) du dispositif de séparation (300) au moyen de raccordement (400) et
- l'élément de séparation (100) avec un boîtier (90) et au moins un élément filtrant (10, 20) disposé dans ce dernier et un couvercle de boîtier (30) conçu pour fermer une face frontale du boîtier (90) avec
-- au moins un premier passage de gaz (32) disposé de manière centrale, notamment coaxiale, par rapport à un axe de montage (40) de l'élément de séparation (100) sur le moyen de raccordement (400),
-- un filet (36) associé au premier passage de gaz (32), dans lequel ce filet de couvercle de boîtier (36) est adapté pour être vissé sur un filet (232) de l'élément de raccordement (200) et
-- au moins un second passage de gaz (34) disposé radialement à l'extérieur du premier passage de gaz (32) par rapport à l'axe de montage (40) de l'élément de séparation (100),
dans lequel
- le filet de couvercle de boîtier (36) et le filet d'élément de raccordement (232) sont essentiellement reliés l'un à l'autre de manière étanche en position d'utilisation du dispositif de séparation (300) et
- le canal d'évacuation des fluides (220) est disposé à l'intérieur de l'élément de raccordement (200),
**caractérisé en ce que**
- l'élément filtrant (10, 20) présente une face frontale s'étendant radialement par rapport à l'axe de montage (40) de l'élément de séparation (100) et faisant face au couvercle de boîtier (30), laquelle face frontale est limitée par un premier disque d'extrémité (50),
- le premier disque d'extrémité (50) présente une ouverture de pénétration (60) conçue pour faire passer l'élément de raccordement (200) et associée au premier passage de gaz (32), dans lequel l'ouverture de pénétration (60) est limitée par une zone périphérique (62) radialement intérieure du premier disque d'extrémité (50) par rapport à l'axe de montage (40) de l'élément de raccordement (100),
- au moins un élément d'étanchéité et d'amortissement (80) pour étancher un côté pur de l'élément de séparation (100) d'un côté brut du boîtier (100) contenant un fluide non purifié et pour atténuer des oscillations de l'élément filtrant (10, 20) orientées en sens axial par rapport à l'axe de montage (40) de l'élément de séparation (100) est comprimé de manière étanche entre l'élément filtrant (10, 20) et la face intérieure du couvercle de boîtier (30) orientée vers l'espace intérieur du boîtier (90), et
- l'élément de raccordement (200) et le premier disque d'extrémité (50), notamment l'élément de raccordement (200) et l'ouverture de pénétration (60), notamment l'élément de raccordement (200) et une zone périphérique (62) radialement intérieure, notamment circulaire, sont sans contact en position d'utilisation du dispositif de séparation (300) de telle manière que le filet de couvercle de boîtier (36) et l'espace intérieur de l'élément filtrant (10, 20) sont connectés fluidiquement par étranglement.

2. Dispositif de séparation selon la revendication 1, **caractérisé en ce que**
- l'élément filtrant (10, 20) présente une face frontale s'étendant radialement par rapport à l'axe de montage (40) de l'élément de séparation (100) et faisant face au couvercle de boîtier (30), laquelle face frontale est limitée par un premier disque d'extrémité (50),
- le premier disque d'extrémité (50) présente une ouverture de pénétration (60) conçue pour faire passer l'élément de raccordement (200) et associée au premier passage de gaz (32), dans lequel l'ouverture de pénétration (60) est entourée par une zone périphérique (62) radialement intérieure du premier disque d'extrémité (50) par rapport à l'axe de montage (40) de l'élément de raccordement (100), et
- l'élément de raccordement (200) s'étend en position d'utilisation du dispositif de séparation (300) à travers l'ouverture de pénétration (60) du premier disque d'extrémité (50), dans lequel l'élément de raccordement (200) est disposé dans la zone de l'ouverture de pénétration (60) de telle manière par rapport à l'élément filtrant (10, 20) qu'une fente, qui relie le filet de couvercle de boîtier (36) et l'espace intérieur de l'élément filtrant (10, 20) fluidiquement, notamment par étranglement, est formée à une certaine distance (272) entre la paroi périphérique (230) radialement extérieure de l'élément de raccordement (200) et la zone périphérique (62) radialement intérieure, notamment circulaire.

3. Dispositif de séparation selon la revendication 2, **caractérisé en ce que** la distance (272) entre la paroi périphérique (230) radialement extérieure de l'élément de raccordement (200) par rapport à l'axe de montage (40) de l'élément de séparation (100) et la zone périphérique (62) radialement intérieure, notamment circulaire, du premier disque d'extrémité (50) s'élève au maximum environ à un pourcent du diamètre de la paroi périphérique (230) radialement extérieure de l'élément de raccordement (200) disposée dans l'ouverture de pénétration (60).

4. Dispositif de séparation selon l'une des revendications précédentes, **caractérisé en ce que** l'élément de séparation (100) présente
- un boîtier (90) avec au moins un élément filtrant (10, 20) disposé dans le boîtier (90) pour séparer au moins un liquide d'un gaz et
- un couvercle de boîtier (30) conçu pour fermer une face frontale du boîtier (90) avec
-- au moins un premier passage de gaz (32) disposé de manière centrale, notamment coaxiale, par rapport à un axe de montage (40) de l'élément de séparation (100) sur un moyen de raccordement,
-- un filet (36) associé au premier passage de gaz (32), dans lequel le filet de couvercle de boîtier (36) est adapté pour être vissé sur un filet (232) d'un élément de raccordement (200) conçu pour connecter l'élément de séparation (100) au moyen de raccordement, et
-- au moins un second passage de gaz (34) disposé radialement à l'extérieur du premier passage de gaz (32) par rapport à l'axe de montage (40) de l'élément de séparation (100),
dans lequel
- le premier passage de gaz (32) et le second passage de gaz (34) sont les seules ouvertures du couvercle de boîtier (30) et le couvercle de boîtier (30) est par ailleurs complètement fermé et
- le filet de couvercle de boîtier (36) est conçu pour un engagement essentiellement étanche avec le filet d'élément de raccordement (232).

5. Dispositif de séparation selon la revendication 4, **caractérisé en ce que** le premier passage de gaz (32) du couvercle de boîtier (30) est de configuration cylindrique et le filet de couvercle de boîtier (36) présente au moins un pas de vis qui s'enroule de manière continue en forme d'hélice autour de la circonférence du premier passage de gaz (32) de forme cylindrique du couvercle de boîtier (30) et est complètement fermé, donc sans entailles ni interruptions.

6. Dispositif de séparation selon la revendication 4 ou 5, **caractérisé en ce que** la profondeur de vissage du filet de couvercle de boîtier (36) s'élève au moins à un tiers du diamètre du premier passage de gaz (32).

7. Dispositif de séparation selon au moins l'une des revendications 4 à 6, **caractérisé en ce que** le filet de couvercle de boîtier (36) est exécuté dans la classe de tolérance moyenne (m) selon DIN ISO 965-1, notamment dans la classe de tolérance M39 selon DIN ISO 965-1, ou dans la classe de tolérance fine (f) selon DIN ISO 965-1.

8. Dispositif de séparation selon au moins l'une des revendications 4 à 7, **caractérisé en ce que,** pour renforcer l'effet étanchant du filet de couvercle de boîtier (36), au moins un moyen d'étanchéité du filet est disposé dans la zone d'au moins un pas de vis du filet de couvercle de boîtier (36).

9. Dispositif de séparation selon au moins l'une des revendications 4 à 8, **caractérisé en ce que** l'élément filtrant (10, 20) présente une face frontale s'étendant radialement par rapport à l'axe de montage (40) de l'élément de séparation (100) et faisant face au couvercle de boîtier (30), laquelle face frontale est limitée par un premier disque d'extrémité (50), dans lequel le premier disque d'extrémité (50)
- présente une ouverture de pénétration (60) associée au premier passage de gaz (32) et conçue pour recevoir l'élément de raccordement (200) et
- présente une zone périphérique (62) intérieure circulaire entourant l'ouverture de pénétration (60) et s'étendant radialement par rapport à l'axe de montage (40) de l'élément de séparation (100).

10. Dispositif de séparation selon la revendication 9, **caractérisé en ce que** le premier disque d'extrémité (50) est réalisé de telle manière et/ou le diamètre de la zone périphérique (62) intérieure est sélectionné de telle manière que le premier disque d'extrémité (50) et l'élément de raccordement (200) sont sans contact en position d'utilisation.

11. Dispositif de séparation selon la revendication 9 ou 10, **caractérisé en ce que** la zone périphérique intérieure (62) du premier disque d'extrémité (50) est ou présente au moins un premier élément de barre entourant l'ouverture de pénétration (60), s'étendant radialement vers l'intérieur par rapport à l'axe de montage (40) de l'élément de séparation (100) et entourant une ouverture circulaire et le premier disque d'extrémité (50) présente de préférence au moins un autre élément de barre (64) entourant l'ouverture de pénétration (60) et s'étendant radialement vers l'intérieur par rapport à l'axe de montage (40) de l'élément de séparation (100), dans lequel le premier élément de barre (62) et l'autre élément de barre (64) sont disposés de manière décalée axialement par rapport à l'axe de montage (40) de l'élément de séparation (100) de telle manière qu'ils forment en position d'utilisation de l'élément de séparation (100) au moins une chambre de retenue de fluide (66), dans lequel cette chambre de retenue de fluide est conçue pour étrangler, accumuler ou collecter le fluide séparé par l'élément filtrant (10, 20) et s'écoulant dans l'ouverture de pénétration (60).

12. Dispositif de séparation selon au moins l'une des revendications 4 à 11, **caractérisé en ce que** l'élément de séparation (100) présente au moins un élément d'étanchéité du labyrinthe (62, 64) conçu pour interagir avec la paroi périphérique radialement extérieure de l'élément de raccordement (200) s'étendant à travers le premier passage de gaz (32) en position d'utilisation de l'élément de raccordement (200) à la façon d'une garniture en labyrinthe de telle manière que le premier passage de gaz (32) est essentiellement imperméable aux fluides, notamment élément de séparation selon la revendication 14, **caractérisé en ce que** le premier élément de barre (62) et l'autre élément de barre (64) sont conçus pour interagir à la façon d'une garniture en labyrinthe avec l'élément de raccordement (200) s'étendant à travers l'ouverture de pénétration (60) en position d'utilisation de l'élément de séparation (100) de telle manière qu'une fente (272) de l'ouverture de pénétration (60) disposée entre le premier disque d'extrémité (50) et l'élément de raccordement (200) est essentiellement imperméable aux fluides et/ou essentiellement imperméable aux liquides.

13. Dispositif de séparation selon au moins l'une des revendications 4 à 12, **caractérisé en ce que** l'élément d'étanchéité et d'amortissement (80), au moins au nombre d'un, est comprimé de manière étanche entre le premier disque d'extrémité (50) et la face intérieure du couvercle de boîtier (30) orientée vers l'espace intérieur du boîtier (90), dans lequel l'élément d'étanchéité et d'amortissement (80) est conçu pour
- étancher un côté pur de l'élément de séparation (100) d'un côté brut du boîtier (100) contenant un fluide non purifié et
- amortir des oscillations de l'élément filtrant (10, 20) orientées axialement par rapport à l'axe de montage (40) de l'élément de séparation (100).

14. Dispositif de séparation selon la revendication 13, **caractérisé en ce que** l'extension axiale de l'élément d'étanchéité et d'amortissement (80) par rapport à l'axe de montage (40) de l'élément de séparation (100) s'élève au moins à un millimètre, notamment au moins à deux millimètres, par exemple au moins à trois millimètres.

15. Dispositif de séparation selon la revendication 13 ou 14, **caractérisé en ce que** l'élément d'étanchéité et d'amortissement (80) est réalisé par au moins un matériau qui présente aussi bien une résistance aux températures de plus de 100 degrés Celsius qu'une résistance à l'huile de longue durée, notamment une résistance à l'huile selon DIN EN 60811-2-1.
